# EUROPEAN PATENT SPECIFICATION

(11) **EP 2 973 806 B1**
(45) Date of publication and mention of the grant of the patent: **08.05.2019**
(21) Application number: 13878287.5
(22) Date of filing: 15.03.2013
(51) Int. Cl.: H01M 4/70, H01M 4/02, H01M 4/134, H01M 4/1395, H01M 4/36, H01M 4/38, H01M 4/40, H01M 4/62

(54) **PROTECTIVE STRUCTURES FOR ELECTRODES**
SCHUTZSTRUKTUREN FÜR ELEKTRODEN
STRUCTURES PROTECTRICES POUR ÉLECTRODES

(43) Date of publication of application: 20.01.2016
(73) Proprietor: Sion Power Corporation, Tucson, AZ 85756 (US)
(72) Inventor: SAFONT SEMPERE, Marina, M., Sahuarita, AZ 85629 (US); SCORDILIS-KELLEY, Chariclea, Tucson, AZ 85748 (US)
(74) Representative: Hoffmann Eitle
(86) International application number: PCT/US2013/031973
(87) International publication number: WO 2014/142953

(56) References cited:
- US-A- 5 314 765
- US-A- 6 025 094
- US-A1- 2010 068 628
- US-A1- 2011 177 398
- US-A1- 2012 043 940
- US-A1- 2012 141 881
- US-A1- 2013 017 441
- US-B1- 6 911 280

## Description

### FIELD OF THE INVENTION

Disclosed embodiments are related to protective structures for electrodes.

### BACKGROUND

One of the factors that decreases cycle life in lithium- (or other alkali metal- or alkali earth metal-) based batteries is the consumption of electrolyte during cycling of the battery due to reaction of metallic lithium present in the electrodes with the electrolyte. In order to minimize, or substantially prevent, this reaction and consequently increase the cycle life of the cell, it is desirable to isolate the metallic lithium from the electrolyte. This often times involves the use of a lithium ion conductive material coated on the surface of the metallic lithium. This material allows lithium ions to diffuse to and from the metallic lithium surface while excluding the electrolyte to substantially prevent this reaction. Improvements in the protective structures for lithium and other alkali metal electrodes would be beneficial and would have application in a number of different fields involving the use of such batteries and electrodes.

US2013017441 (A1) discloses articles and methods for forming protected electrodes for use in electrochemical cells, including those for use in rechargeable lithium batteries. In some embodiments, the articles and methods involve an electrode that does not include an electroactive layer, but includes a current collector and a protective structure positioned directly adjacent the current collector, or separated from the current collector by one or more thin layers. Lithium ions may be transported across the protective structure to form an electroactive layer between the current collector and the protective structure. In some embodiments, an anisotropic force may be applied to the electrode to facilitate formation of the electroactive layer.

US5314765 (A) discloses a battery structure including a cathode, a lithium metal anode and an electrolyte disposed between the lithium anode, wherein the cathode utilizes a thin-film layer of lithium phosphorus oxynitride overlying so as to coat the lithium anode and thereby separate the lithium anode from the electrolyte. In some embodiments of this disclosure, a preliminary layer of lithium nitride may be coated upon the lithium anode before the lithium phosphorous oxynitride is, in turn, coated upon the lithium anode.

### SUMMARY

Disclosed embodiments are related to protective structures for electrodes. The subject matter of this application involves, in some cases, interrelated structures and methods, alternative solutions to a particular problem, and/or a plurality of different uses of structures.

The electrode structure of the invention comprises a metallic lithium layer and a substantially continuous and substantially nonporous buffer layer disposed on the metallic lithium layer. The buffer layer is conductive to lithium ions and comprises a ceramic, a glassy-ceramic, or a glass. Further, a substantially continuous and substantially nonporous lithium nitride layer is disposed on the buffer layer.

A method for forming an electrode structure is also provided by the invention. The method includes providing a metallic lithium layer, depositing a substantially continuous and substantially nonporous buffer layer onto the metallic lithium layer, wherein the buffer layer is conductive to lithium ions and comprises a ceramic, a glassy-ceramic, or a glass. The method also comprises depositing a substantially continuous and substantially nonporous lithium nitride layer onto the buffer layer.

### BRIEF DESCRIPTION OF DRAWINGS

In the figures, each identical or nearly identical component illustrated is typically represented by a single numeral. For purposes of clarity, not every component is labeled in every figure, nor is every component of each embodiment of the invention shown where illustration is not necessary to allow those of ordinary skill in the art to understand the invention. In the figures:
Fig. 1 is a schematic representation of an electrode structure incorporating a protective layer deposited on a buffer layer according to one set of embodiments;
Fig. 2 is a schematic representation of an electrode structure incorporating a protective layer deposited on a buffer layer and an intermediate layer according to one set of embodiments;
Fig. 3 is a representative flow diagram of a method to form an electrode structure according to one set of embodiments;
Fig. 4A is a schematic representation of an electrode structure incorporating a release layer and carrier substrate attached to the bottom surface of an electroactive layer according to one set of embodiments;
Fig. 4B is a schematic representation of an electrode structure incorporating a release layer and a carrier substrate attached to a protective layer according to one set of embodiments;
Fig. 4C is a schematic representation of an electrode structure with a release layer incorporated in a final electrode structure according to one set of embodiments;
Fig. 5 is a picture and optical profilometry image of lithium nitride deposited onto a copper metallized substrate which does not form part of the invention;
Fig. 6 is a picture and optical profilometry image of lithium nitride deposited onto a lithium metal substrate which does not form part of the invention;
Fig. 7 is a picture and optical profilometry image of lithium nitride deposited onto a lithium oxide buffer layer and underlying lithium metal substrate;
Fig. 8 is a scanning electron microscope image of lithium nitride deposited onto a lithium oxide buffer layer and an underlying lithium metal substrate;
Fig. 9 is a scanning electron microscope image of lithium nitride deposited onto a lithium oxide buffer layer and an underlying lithium metal substrate; and
Fig. 10 is a graph of impedance spectra for electrodes having lithium oxide layers which do not form part of the invention and electrodes according to the invention having lithium nitride layers deposited on lithium oxide buffer layers.

### DETAILED DESCRIPTION

Protective structures for electrodes, such as lithium metal electrodes, are provided. While any number of materials might be suitable for use in a protective structure, one suitable material for use as a protective structure in an electrode structure is lithium nitride due to its high lithium ion conductivity. A lithium nitride layer may be produced by reaction of lithium with nitrogen gas and coated onto an inert substrate (i.e., a substrate that does not include lithium) such as a polyester (e.g., polyethylene terephthalate) or polyimide substrate, a metallized substrate, or a bare substrate. When manufactured in this fashion, the lithium nitride layer may be uniform and continuous as well as being substantially amorphous and non-porous. The lithium nitride layer can then be laminated or otherwise disposed onto lithium metal to form a protected electrode structure.

While the above process may produce a useable protective layer, the inventors have recognized that it is desirable to form the protective layer directly onto metallic lithium. Forming a lithium nitride layer directly onto metallic lithium can afford several advantages such as simplifying the manufacturing process (as a separate lamination step would not be required), reducing the number of interfaces, reducing the thickness of the protective layer, and/or providing an improved interface between the metallic lithium and the lithium nitride which may result in lower interface resistance and lower overall cell resistance. However, when some protective layers such as lithium nitride are coated on top of a metallic lithium surface, partial or total conversion of the underlying metallic lithium may occur due to reaction of the lithium metal with the reactive gas used to form the protective layer (e.g., nitrogen gas). In other words, instead of simply forming a layer of lithium nitride on the metallic lithium, all or a portion of the bulk metallic lithium may also react with the nitrogen to form lithium nitride. This reaction with the underlying bulk metallic lithium results in a polycrystalline, porous ceramic layer which may be unsuitable as a protective layer since electrolyte can diffuse through the porous structure and react with the underlying metallic lithium. Moreover, since the conversion of the lithium surface may proceed in a non-uniform fashion, the thickness of the resulting ceramic layer of lithium nitride may not be substantially uniform across the metallic lithium surface.

In view of the above, the inventors have recognized that it is desirable to substantially prevent conversion of the underlying metallic lithium during the deposition of lithium nitride, or any other appropriate protective layer, to provide a substantially continuous protective layer with a reduced porosity. As described in more detail below, one way in which to avoid conversion of the underlying metallic lithium is to provide a lithium ion conductive material between the underlying metallic lithium prior and the protective layer. The lithium ion conductive material may act as a buffer between the underlying metallic lithium and the subsequently deposited protective layer. In order to reduce or prevent non-desired reactions, this buffer layer may comprise a material that is substantially compatible with either one or both of the underlying metallic lithium and the protective layer. The buffer layer may also be substantially continuous and/or nonporous to effectively isolate the metallic lithium from the protective layer.

Without wishing to be bound by theory, substantially avoiding the interconversion of the surface of the underlying metallic lithium during deposition of a lithium nitride protective layer may result in a substantially continuous, less-porous, more amorphous, and smoother lithium nitride layer protective layer being deposited. Further, as described in more detail below, the lithium nitride coating thickness may be more precisely controlled due to substantially eliminating the uncontrolled and substantially non-uniform growth associated with interconversion of the underlying metallic lithium. When compared to the polycrystalline porous structure resulting from direct deposition of the lithium nitride protective layer onto the underlying metallic lithium without a buffer layer, the resulting protective structure formed by using a buffer layer is expected to substantially prevent reaction between the electrolyte and metallic lithium, resulting in an increased cycle life. Further, since the thickness of the lithium nitride protective layer is more controllable when substantially avoiding interconversion, a specific and substantially uniform protective layer thickness may be provided.

For the sake of clarity, the structures described herein are referred to as electrode structures, which may refer to either an electrode precursor or a final electrode. An electrode precursor may include, for example, an electrode including one or more components such as a carrier substrate that will not be present in a final electrode or final electrochemical cell, or an electrode that is absent one or more components prior to being used as a final electrode or in a final electrochemical cell. It should be understood, therefore, that the embodiments described herein should not be limited to either an electrode precursor or a final electrode. Instead, the embodiments described herein are meant to apply to any of an electrode precursor, an unassembled final electrode, and a final electrode assembled into an electrochemical cell or any other appropriate device.

The electrode structures described herein are described in reference to the lithium metal-based system defined in the claims. Although rechargeable electrochemical cells are intended to benefit from the current disclosure, non-rechargeable (i.e., primary) electrochemical cells can also benefit from the current disclosure.

Turning now to the figures, specific embodiments of the current electrode structures are described in more detail below. It should be understood that while certain layers depicted in the figures are disposed directly on one another, other intermediate layers may also be present between the depicted layers in certain embodiments. Accordingly, as used herein, when a layer is referred to as being "disposed on", "deposited on", or "on" another layer, it can either be directly disposed on, deposited onto, or on the layer, or an intervening layer may also be present. In contrast, a layer that is "directly disposed on", "in contact with", "directly deposited on", or "directly on" another layer indicates that no intervening layer is present.

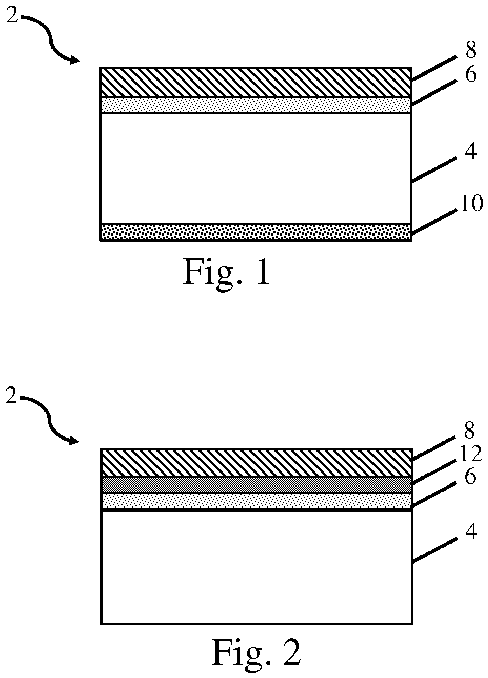

Fig. 1 depicts one embodiment of an electrode structure 2. The electrode structure includes an electroactive material layer 4, a buffer layer 6 disposed on the metallic lithium layer 4, and a protective layer 8 disposed on the buffer layer 6. In the invention, the buffer layer 6 and protective layer 8 are substantially continuous and nonporous to both protect the underlying electroactive material layer from reacting with the electrolyte present in an electrochemical cell, as well as substantially prevent reaction between the underlying electroactive material layer and the protective layer.

The electroactive material layer 4 of the invention is made of metallic lithium as the electroactive material. In some embodiments, the electroactive material is a lithium metal doped with Al, Ag, Mg, Zn, or Si. Examples of other applicable alloys are described in more detail in U.S. Patent Apl. Serial No: 12/862,528, filed on August 24, 2010, published as U.S. Pub. No. 2011/0177398, entitled "Electrochemical Cell" and U.S. Patent Apl. Serial No: 11/821,576, filed on June 22, 2007, published as U.S. Pub. No. 2008/0318128, entitled "Lithium Alloy/Sulfur Batteries"..

In some embodiments, the electroactive material layer functions as both the electroactive material and as a current collector. Alternatively, in some embodiments, such as an electrode structure for a high rate electrochemical cell, it is desirable to include a current collector 10, see Fig. 1. In such an embodiment, the current collector may function to collect charge from the electroactive material and conduct that charge to a lead and external contact. In some embodiments, the current collector may also function as a structural element for deposition of the electroactive material and/or supporting the electrode structure.

As noted above, buffer layer 6 may substantially isolate the electroactive material layer 4 from the protective layer 8 to substantially prevent conversion of the electroactive material layer during deposition of the protective layer as well as any subsequent reactions. Without wishing to be bound by theory, a buffer layer that is porous and/or not continuous will not effectively isolate the electroactive material layer from reactive gases, materials, or fluids used to form the protective layer due to diffusion of those reactive gases, materials, or fluids through the porous buffer layer. In order to isolate the electroactive material layer, the buffer layer 6 is substantially continuous, and substantially nonporous, and is in some embodiments defect free across substantially the entire surface of the electroactive material layer. In some embodiments, it is also desirable that the buffer layer be substantially compatible with one, or both, of the electroactive material layer and protective layer to avoid reactions of the buffer layer with the electroactive material layer and protective layer. Further, due to the buffer layer being disposed on the electroactive material layer, the buffer layer is conductive to the electroactive species of the electroactive material layer.

In some cases, at least a portion of the buffer layer is not substantially nonporous or continuous, but any pores, defects, or non-continuous portions may be filled with a material that allows the buffer layer to have an overall substantially nonporous and substantially continuous configuration. For example, in some embodiments the deposition of an intermediate layer over the buffer layer may result in some of the material from the intermediate layer filling any pores, defects, and/or non-continuous portions of the buffer layer. The material filling the pores, defects, and/or non-continuous portions of the buffer layer may be, for example, a ceramic, a glassy-ceramic, a glass, or a polymer. In other embodiments, at least a portion of the buffer layer is not substantially nonporous or continuous, but covers enough of the electroactive material layer to substantially prevent or reduce conversion of the electroactive material during subsequent deposition of a protective layer. Other configurations of the buffer layer are also possible.

As discussed in more detail in Example 4 below, direct conversion of the electroactive material surface to form a buffer layer does not result in a substantially nonporous and continuous buffer layer. Without wishing to be bound by theory, directly converting the material located on the electroactive material surface from, for example, metallic lithium to lithium oxide results in a large volume increase. As the conversion process continues, delamination and fracturing of the converted material relative to the underlying electroactive material may occur to accommodate the associated volume change and resulting in the observed porous buffer layer. One specific example of direct conversion of the electroactive material surface is a plasma treatment of an electroactive material such as metallic lithium to form, for example, lithium oxide or another material. As presented in the examples, the resulting lithium oxide layer is porous and does not isolate the underlying metallic lithium during subsequent deposition of the protective layer resulting in partial or total conversion of the metallic lithium. In view of the above, in at least some embodiments, a buffer layer is deposited onto the electroactive material layer instead of directly converting a surface of the electroactive material to form the buffer layer. However, when combined with other intermediate layers to effectively isolate the electroactive material during deposition of the protective layer, direct conversion of the electroactive material may be performed in some embodiments.

The buffer layer comprises a ceramic, a glassy-ceramic, or a glass, and may be made from any suitable material. Depending on the particular embodiment, the buffer layer may be either electrically insulating or electrically conducting. With respect to the current discussion regarding lithium metal based electrode structures, suitable materials for the protective layer may include, but are not limited to, lithium oxides (e.g., Li₂O, LiO, LiO₂, LiRO₂, where R is a rare earth metal), lithium phosphorus oxynitride, lithium oxynitride, lithium carbonate, lithium halide, lithium iodide, and lithium bromide. Various other lithium conductive ceramic materials that are nonreactive with metallic lithium could also be used for the buffer layer as the current disclosure is not limited in this fashion. In some embodiments, the buffer layer may be formed from more than one material or material layers.

In some embodiments, the buffer layer may exhibit ion conductivities relative to the electroactive species greater than or equal to about 10⁻⁷ S/cm, greater than or equal to about 10⁻⁶ S/cm, greater than or equal to about 10⁻⁵ S/cm, greater than or equal to about 10⁻⁴ S/cm, greater than or equal to about 10⁻³ S/cm, or any other appropriate conductivity. Correspondingly, the buffer layer may exhibit conductivities of less than or equal to about 10⁻¹ S/cm, less than or equal to about 10⁻² S/cm, less than or equal to about 10⁻³ S/cm, less than or equal to about 10⁻⁴ S/cm, or any other appropriate conductivity. Combinations of the above are possible (e.g., a conductivity of greater than or equal to about 10⁻⁷ S/cm and less than or equal to about 10⁻⁴ S/cm). Other ranges are also possible.

In certain embodiments, the thickness of the electroactive material layer may vary from, e.g., about 2 to 200 microns. For instance, the electroactive material layer may have a thickness of less than or equal to about 200 microns, less than or equal to about 100 microns, less than or equal to about 75 microns, less than or equal to about 50 microns, less than or equal to about 25 microns, less than or equal to about 20 microns, less than or equal to about 15 microns, less than or equal to about 10 microns, less than or equal to about 5 microns, or any other appropriate thickness. In some embodiments, the electroactive material layer may have a thickness of greater than or equal to about 1 micron, greater than or equal to about 2 microns, greater than or equal to about 3 microns, greater than or equal to about 4 microns, greater than or equal to about 5 microns, greater than or equal to about 10 microns, greater than or equal to about 15 microns, greater than or equal to about 20 microns, greater than or equal to about 50 microns, greater than or equal to about 75 microns, greater than or equal to about 100 microns, greater than or equal to about 150 microns, or any other appropriate thickness. Combinations of the above-referenced ranges are also possible (e.g., greater than or equal to about 2 microns and less than or equal to about 200 microns). Other ranges are also possible. The choice of the thickness may depend on cell design parameters such as the desired cycle life, cell capacity, the desired anode to cathode balance, and other appropriate parameters.

The electroactive material layer may be formed using physical vapor deposition, sputtering, chemical deposition, electrochemical deposition, thermal evaporation, jet vapor deposition, laser ablation, or any other appropriate method. The electroactive material layer may be embodied by any appropriate structure including, but not limited to: a foil; a coating on an underlying substrate; a composite (e.g. lithium metal including a nanomaterial such as silicon or graphite particles or a three-dimensional structure of carbon and/or graphite in the form of a fiber mat or nanowires attached to a substrate); or any other appropriate structure.

In addition to the above, it may be desirable to reduce the cell internal resistance when a buffer layer is included in an electrode or electrochemical cell. In such embodiments, it may be desirable to provide a relatively thin buffer layer to limit the cell internal resistance due to inclusion of the buffer layer. In some embodiments, the buffer layer may have a thickness that is less than or equal to about 2 µm, less than or equal to about 1 µm, less than or equal to about 900 nm, less than or equal to about 800 nm, less than or equal to about 700 nm, less than or equal to about 600 nm, less than or equal to about 500 nm, less than or equal to about 400 nm, less than or equal to about 300 nm, less than or equal to about 200 nm, less than or equal to about 100 nm, less than or equal to about 50 nm, or any other appropriate thickness. Correspondingly, the buffer layer may have a thickness that is greater than or equal to about 50 nm, greater than or equal to about 100 nm, greater than or equal to about 200 nm, greater than or equal to about 300 nm, greater than or equal to about 400 nm, greater than or equal to about 500 nm, greater than or equal to about 600 nm, greater than or equal to about 700 nm, or any other appropriate thickness. Combinations of the above are possible (e.g. a buffer layer thickness of greater than or equal to about 100 nm and less than or equal to about 1 µm). Other ranges are also possible.

The buffer layer may be deposited by any suitable method such as sputtering, electron beam evaporation, vacuum thermal evaporation, laser ablation, chemical vapor deposition (CVD), thermal evaporation, plasma enhanced chemical vacuum deposition (PECVD), laser enhanced chemical vapor deposition, and jet vapor deposition. The technique used may depend on the type of material being deposited, the thickness of the layer, and other appropriate considerations.

The protective layer may be made from any suitable material capable of substantially isolating the electroactive material layer from the electrolyte present in an electrochemical cell and that is conductive to the electroactive species. In some embodiments, the protective layer may also be referred to as a "single-ion conductive material layer". The protective layer may also be electrically insulating. In some embodiments, the protective layer is a ceramic, a glassy-ceramic, or a glass. In the invention, the protective layer is lithium nitride.

Suitable materials for a current collector include, but are not limited to: metals (e.g., copper, nickel, aluminum, passivated metals, and other appropriate metals); metallized polymers; electrically conductive polymers; polymers including conductive particles dispersed therein; and other appropriate materials. In some embodiments, the current collector is deposited onto the electroactive material layer using physical vapor deposition, chemical vapor deposition, electrochemical deposition, sputtering, doctor blading, flash evaporation, or any other appropriate deposition technique for the selected material. Alternatively, the current collector might be formed separately and bonded to the electrode structure using any appropriate method.

As described herein, the protective layer 8 of the invention is substantially continuous and nonporous in order to protect the underlying electroactive material layer from the electrolyte in an electrochemical cell. Further, in some embodiments, it is also desirable that the protective layer be substantially compatible with the buffer layer in order to form a stable final electrode structure. However, in some cases, the protective layer is not substantially compatible with the buffer layer. In such an embodiment, an intermediate layer 12, as depicted in Fig. 2, that is compatible with both the buffer layer and the protective layer, may be disposed between the buffer layer and protective layer to provide a stable final electrode structure. Examples of intermediate layers include polymeric layers, glassy layers, ceramic layers, and glassy-ceramic layers.

In some embodiments, the protective layer may exhibit ion conductivities relative to the electroactive species greater than or equal to about 10⁻⁷ S/cm, greater than or equal to about 10⁻⁶ S/cm, greater than or equal to about 10⁻⁵ S/cm, greater than or equal to about 10⁻⁴ S/cm, greater than or equal to about 10⁻³ S/cm, or any other appropriate conductivity. Correspondingly, the protective layer may exhibit conductivities of less than or equal to about 10⁻¹ S/cm, less than or equal to about 10⁻² S/cm, less than or equal to about 10⁻³ S/cm, less than or equal to about 10⁻⁴ S/cm, or any other appropriate conductivity. Combinations of the above are possible (e.g., a conductivity of greater than or equal to about 10⁻⁶ S/cm and less than or equal to about 10⁻¹ S/cm). Other ranges are also possible.

Similar to the buffer layer, it may be desirable to reduce the cell internal resistance when the protective layer is included in an electrode or electrochemical cell. Therefore, it may be desirable to provide a relatively thin protective layer to limit the cell internal resistance due to inclusion of the protective layer. In some embodiments, the protective layer may have a thickness that is less than or equal to about 10 times the thickness of the buffer layer, less than or equal to about 5 times the thickness of the buffer layer, less than or equal to about 4.5 times the thickness of the buffer layer, less than or equal to about 4 times the thickness of the buffer layer, less than or equal to about 3.5 times the thickness of the buffer layer, less than or equal to about 3 times the thickness of the buffer layer, less than or equal to about 2 times the thickness of the buffer layer, less than or equal to about the thickness of the buffer layer, or any other appropriate thickness. Correspondingly, the protective layer may have a thickness that is greater than or equal to about 0.1 times the thickness of the buffer layer, greater than or equal to about 0.2 times the thickness of the buffer layer, greater than or equal to about 0.5 times the thickness of the buffer layer, greater than or equal to about the thickness of the buffer layer, greater than or equal to about 2 times the thickness of the buffer layer, greater than or equal to about 2.5 times the thickness of the buffer layer, greater than or equal to about 3 times the thickness of the buffer layer, greater than or equal to about 3.5 times the thickness of the buffer layer, greater than or equal to about 4 times the thickness of the buffer layer, greater than or equal to about 4.5 times the thickness of the buffer layer, or any other appropriate thickness. Combinations of the above are possible (e.g. a protective layer thickness that is greater than or equal to about 2 times the thickness of the buffer layer and less than or equal to about 10 times the thickness of the buffer layer). Other ranges are also possible.

In addition to the above, in other embodiments, the protective layer may have a thickness that is less than or equal to about 2 µm, less than or equal to about 1 µm, less than or equal to about 900 nm, less than or equal to about 800 nm, less than or equal to about 700 nm, less than or equal to about 600 nm, less than or equal to about 500 nm, less than or equal to about 400 nm, less than or equal to about 300 nm, less than or equal to about 200 nm, less than or equal to about 100 nm, less than or equal to about 50 nm, or any other appropriate thickness. Correspondingly, the protective layer may have a thickness that is greater than or equal to about 50 nm, greater than or equal to about 100 nm, greater than or equal to about 200 nm, greater than or equal to about 300 nm, greater than or equal to about 400 nm, greater than or equal to about 500 nm, greater than or equal to about 600 nm, greater than or equal to about 700 nm, or any other appropriate thickness. Combinations of the above are possible (e.g. a protective layer thickness of greater than or equal to about 100 nm and less than or equal to about 1 µm, or a protective layer thickness of greater than or equal to about 100 nm and less than or equal to about 200 nm). Other ranges are also possible.

In some embodiments, the charge transfer resistance across the protective layer and buffer layer is less than the charge transfer resistance across the buffer layer without the protective layer. Without wishing to be bound by theory, by using a protective layer with a lower interfacial impedance with the electrolyte than the interfacial impedance between the buffer layer and the electrolyte, the total charge transfer resistance of the cell can be reduced. The specific resistance values will depend on the conductivities of the specific protective layer and buffer layer used in the electrode. For example, as described in more detail below in the examples, the resistance value for a lithium oxide layer alone in a particular cell is about 6 Ω/cm². This may be compared with a resistance value of about 2 Ω/cm² when a protective nitride layer is disposed on a lithium oxide buffer layer. When the nitride layer is coated onto the lithium oxide buffer layer, it is believed that the charge transfer of Li ions across the solvent/ceramic interface is made easier. Again, without wishing to be bound by theory, the resistance of the solvent/ceramic interface is much greater than the ceramic/ceramic and ceramic/lithium metal interfaces. Therefore, reducing the resistance of the solvent/ceramic interface may result in beneficial reduction in the overall cell resistance.

In some embodiments, the protective layer may have an Ra of less than or equal to about 500 nm, less than or equal to about 400 nm, less than or equal to about 300 nm, less than or equal to about 200 nm, less than or equal to about 150 nm, less than or equal to about 140 nm, less than or equal to about 130 nm, less than or equal to about 120 nm, less than or equal to about 110 nm, or any other appropriate surface roughness. Correspondingly, the protective layer may have an arithmetic mean surface roughness (Ra) that is greater than or equal to about 50 nm, greater than or equal to about 60 nm, greater than or equal to about 70 nm, greater than or equal to about 80 nm, greater than or equal to about 90 nm, greater than or equal to about 100 nm, greater than or equal to about 110 nm, greater than or equal to about 120 nm, greater than or equal to about 130 nm, greater than or equal to about 140 nm, greater than or equal to about 150 nm, greater than or equal to about 200 nm, or any other appropriate surface roughness. Correspondingly, Combinations of the above are possible (e.g. a protective layer with an Ra greater than or equal to about 50 nm and less than or equal to about 150 nm). Other ranges are also possible. Further, while roughnesses greater than those noted above might be used, it should also be noted that roughnesses less than those noted above may also be beneficial.

Similar to the buffer layer, the protective layer may be deposited by any suitable method such as sputtering, electron beam evaporation, vacuum thermal evaporation, laser ablation, chemical vapor deposition (CVD), thermal evaporation, plasma enhanced chemical vacuum deposition (PECVD), laser enhanced chemical vapor deposition, and jet vapor deposition. The technique used may depend on the type of material being deposited, the thickness of the layer, and other appropriate considerations.

While a single protective layer has been depicted in the figures, embodiments in which multiple protective layers, or a multilayer protective structure, are used are also envisioned. For instance, in certain embodiments, an electrode structure or electrochemical cell may include more than one protective layer protecting the anode, and each protective layer may have a range of thickness, conductivity, and/or arithmetic mean surface roughness described herein. Each of the protective layers may be formed of the same material, or different materials.

In some embodiments, a protective layer can be separated from another protective layer by an intervening layer, such as a polymer layer. Possible multilayer structures can include arrangements of polymer layers and single ion conductive layers as described in more detail in U.S. Patent Apl. Serial No: 12/862,528, filed on August 24, 2010, published as U.S. Pub. No. 2011/0177398, entitled "Electrochemical Cell". For example, a multilayer protective layer may include alternating single-ion conductive layer(s) and polymer layer(s) in some embodiments. Other examples and configurations of possible multilayer structures are also described in more detail in U.S. Patent Application No. 11/400,781, filed April 06, 2006, published as U. S. Pub. No. 2007-0221265, and entitled, "Rechargeable Lithium/Water, Lithium/Air Batteries" to Affinito et al..

In some embodiments, a protective layer that includes some porosity can be treated with a polymer or other material such that pinholes and/or nanopores of the protective layer may be filled with the polymer. Examples of techniques for forming such structures are described in more detail in U.S. Patent Apl. Serial No: 12/862,528, filed on August 24, 2010, published as U.S. Pub. No. 2011/0177398, entitled "Electrochemical Cell" and U.S. Patent Application No. 11/400,781, filed April 06, 2006, published as U. S. Pub. No. 2007-0221265, and entitled, "Rechargeable Lithium/Water, Lithium/Air Batteries" to Affinito et al..

A multilayer protective layer can act as a superior permeation barrier by decreasing the direct flow of species to the electroactive material layer, since these species have a tendency to diffuse through defects or open spaces in the layers. Consequently, dendrite formation, self-discharge, and loss of cycle life can be reduced. Another advantage of a multilayer protective layer includes the mechanical properties of the structure. The positioning of a polymer layer adjacent a single-ion conductive layer can decrease the tendency of the single-ion conductive layer to crack, and can increase the barrier properties of the structure. Thus, these laminates may be more robust towards stress due to handling during the manufacturing process than structures without intervening polymer layers. In addition, a multilayer protective layer can also have an increased tolerance of the volumetric changes that accompany the migration of lithium back and forth from the electroactive material layer during the cycles of discharge and charge of the cell.

Without wishing to be bound by theory, grain boundaries located within the buffer layer and/or the protective layer may act as diffusion barriers to the electroactive species which may increase the cell internal resistance. Therefore, while in some embodiments the buffer layer and/or protective layer may comprise, or be substantially formed, of crystalline and/or polycrystalline materials, in other embodiments, the buffer layer and/or protective layer may comprise or be substantially formed of an amorphous material. For example, the buffer layer and/or protective layer may be a partially, or substantially, amorphous material layer. Without wishing to be bound by theory, by making one or both layers partially or substantially amorphous, the number of grain boundaries is reduced, as compared to a layer that is relatively more crystalline and/or polycrystalline, which may lead to a decrease in the observed cell internal resistance. Embodiments in which one of the buffer layer and the protective layer is partially, or substantially, amorphous and the other is substantially crystalline and/or polycrystalline are envisioned. Embodiments in which both the protective layer and the buffer layer are partially, or substantially, amorphous are also envisioned. Any number of different detection methods may be utilized to determine whether the buffer layer is amorphous, partial amorphous, crystalline, or polycrystalline. Appropriate tests may include, but are not limited to, x-ray diffraction, X-ray photoelectron spectroscopy, transmission electron microscopy, differential scanning calorimetry, and light spectroscopy.

The buffer layer and the protective layer may be made partially, or substantially, amorphous using any appropriate method. For example, deposition of compositions that are slightly off stoichiometric ratios may favor deposition of an amorphous material. In one exemplary embodiment, a substantially amorphous buffer layer comprises one or more materials that include nitrogen and oxygen (e.g., lithium oxynitride), such that a molar ratio of nitrogen to oxygen in the buffer layer is less than or equal to about 3:1, 2:1, or 1:1 and greater than or equal to about 1:2, 1:1, or 2:1 though any appropriate molar ratio could be used. Combinations of the above ranges are possible (e.g., a ratio of nitrogen to oxygen that is less than or equal to about 3:1 and greater than or equal to about 1:2). Additionally or alternatively, the buffer layer may include a material that includes carbon, such as lithium carbonate, or another carbonaceous material, such that a molar ratio of lithium and carbon in the buffer layer is less than or equal to about 2:1, 1.75:1, 1.5:1, or 1.25:1 and greater than or equal to about 1:1, 1.25:1, 1.5:1, or 1.75:1, though any appropriate molar ratio could be used. Combinations of the above ranges are possible (e.g., a ratio of lithium to carbon that is less than or equal to about 2:1 and greater than or equal to about 1:1). In some embodiments, the buffer layer may include lithium carbonate, or another carbonaceous material, as a second component in the buffer layer. For example, lithium carbonate, or another carbonaceous material, might be co-deposited as a second component of a buffer layer, as noted in more detail below.

In another embodiment, the buffer layer may comprise or formed from a material including lithium, nitrogen, and oxygen. For example, the lithium content of the buffer layer may be greater than or equal to about 1%, 2%, 3%, 4%, 5%, 10%, 15%, 20%, 25%, 35%, 40%, 45%, 50%, or any other appropriate percentage (e.g., wt% or mol%). Correspondingly, the buffer layer may include a lithium content that is less than or equal to about 75%, 70%, 65%, 60%, 55%, 50%, 45%, 40%, 35%, 30%, 25%, 20%, 15%, 10%, 5%, or any other appropriate percentage (e.g., wt% or mol%). Combinations of the above-referenced ranges are also possible (e.g., a lithium content of greater than or equal to about 1% and less than or equal to about 50%). Other ranges are also possible.

In addition to the lithium content, the buffer layer may include a nitrogen content that is greater than or equal to about 0%, 1%, 2%, 3%, 4%, 5%, 10%, 15%, 20%, 25%, 35%, 40%, or any other appropriate percentage (e.g., wt% or mol%). The buffer layer may also include a nitrogen content that is less than or equal to about 50%, 45%, 40%, 35%, 30%, 25%, 20%, 15%, 10%, 5%, or any other appropriate percentage (e.g., wt% or mol%). Combinations of the above-referenced ranges are also possible (e.g., a nitrogen content of greater than or equal to about 1% and less than or equal to about 50%). Other ranges are also possible.

The oxygen content of the buffer layer may be greater than or equal to about 0%, 1%, 2%, 3%, 4%, 5%, 10%, 15%, 20%, 25%, 35%, 40%, 45%, 50%, 55%, 60%, or any other appropriate percentage (e.g., wt% or mol%). The buffer layer may also include an oxygen content that is less than or equal to about 70%, 65%, 6%, 55%, 50%, 45%, 40%, 35%, 30%, 25%, 20%, 15%, 10%, 5%, or any other appropriate percentage (e.g., wt% or mol%). Combinations of the above-referenced ranges are also possible (e.g., an oxygen content of greater than or equal to about 1% and less than or equal to about 70%). Other ranges are also possible.

The above ranges of elemental materials may be combined to provide a number of different buffer layer compositions. For example, the buffer layer might have a composition including between about 1% to about 75% lithium, about 0% to about 50% nitrogen, and about 0% to about 70% oxygen. Other combinations of the above ranges of elemental materials are also possible. Additionally, in some embodiments, the above compositions might be combined with the use of dopants or other suitable additions.

In another exemplary embodiment, a substantially amorphous protective layer may comprise a material that includes lithium and nitrogen (e.g., lithium nitride) such that a molar ratio of lithium to nitrogen in the protective layer is less than or equal to about 3:1 (e.g., less than or equal to about 2.5:1, less than or equal to about 2:1, or less than or equal to about 1.5:1) and greater than or equal to about 1:1 (e.g., greater than or equal to about 1.5:1, or greater than or equal to about 2:1).

Without wishing to be bound by theory, formation of an amorphous phase when depositing nonstoichiometric compositions may be due to any number of physical phenomena including, but not limited to, competing equilibrium phases, quasi-crystal formation, frustration of crystal formation, and other applicable phenomena.

In some embodiments, the buffer layer and/or the protective layer may include dopants to alter the electrical conductivity and/or conductivity relative to the electroactive species. Possible dopants include carbon, nitrogen, and sulfur-based compounds as well as other appropriate compounds. Specific examples include, but are not limited to, lithium carbonates, lithium nitrates, sulfides, and elemental sulfur. Depending upon the deposition method used, the dopants may either be specific additions made to the buffer layer and/or protective layer, or the dopants may be deposited as a byproduct of the deposition method used. For example, lithium carbonates may be formed during the deposition of a lithium oxide buffer layer when a mixture of carbon dioxide gas and lithium vapor are subjected to a plasma assisted deposition process. While a specific example is given above, it should be understood that any number of appropriate methods could be used to provide the desired doping of a protective layer and/or buffer layer.

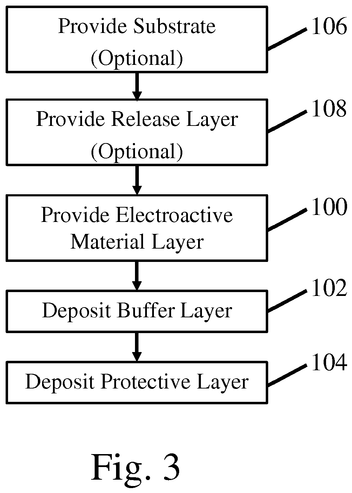

The method for forming an electrode structure of the invention is defined in the claims. Turning now to Fig. 3, one embodiment of a method for producing the electrode structures described herein is provided. In the depicted method, an electroactive material layer may be provided at step 100. Subsequently, a buffer layer and a protective layer are subsequently deposited onto the underlying electroactive material layer in steps 102 and 104. In some embodiments, an optional substrate corresponding to a current collector, a carrier substrate, and/or a structural substrate may be provided at step 106 and an optional release layer may be provided at step 108 as described in more detail below. Depending upon the particular embodiment, the substrate and/or release layer may be provided prior to, or subsequent to, providing the electroactive material layer, depositing the buffer layer, or depositing the protective layer. Further, as described in more detail below, the substrate and release layer may either be positioned relative to a surface of the electroactive material layer or the protective layer as the current disclosure is not limited as to where the substrate and release layer may be located.

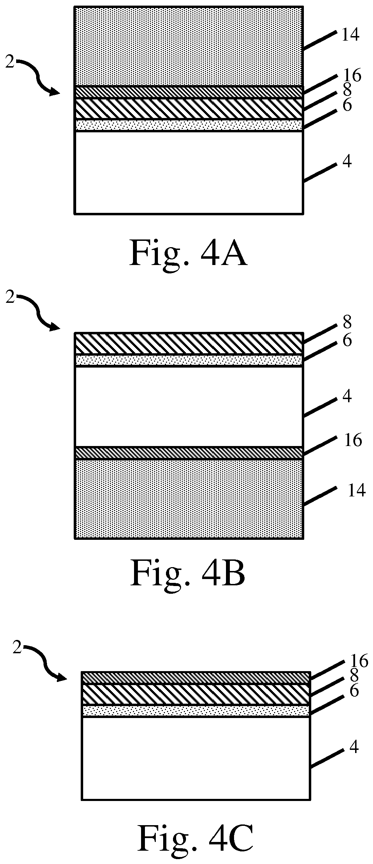

As shown in the embodiment illustrated in Figs. 4A-4C, in some cases, it may be desirable to provide a carrier substrate 14 and a release layer 16 to facilitate handling of the electrode structure during manufacture and assembly. As described in more detail below, depending upon the particular embodiment, the carrier substrate 14 and release layer 16 may be disposed on an exterior surface of the protective layer 8 (Fig. 4A) or on a bottom surface of the electroactive material layer 4 (Fig. 4B). After release of the carrier substrate, a final electrode structure may be formed, as shown illustratively in Fig. 4C.

As described herein, a release layer may be positioned on a carrier substrate to facilitate fabrication of an electrode. Any suitable material can be used as a carrier substrate. In some embodiments, the material (and thickness) of a carrier substrate may be chosen at least in part due to its ability to withstand certain processing conditions such as high temperature. The substrate material may also be chosen at least in part based on its adhesive affinity to a release layer. In some cases, a carrier substrate is a polymeric material. Examples of suitable materials that can be used to form all or portions of a carrier substrate include certain of those described herein suitable as release layers, optionally with modified molecular weight, cross-linking density, and/or addition of additives or other components. In certain embodiments, a carrier substrate may comprise a polyester such as polyethylene terephthalate (PET) (e.g., optical grade polyethylene terephthalate); a polyamide; or another suitable polymer. In other cases, a carrier substrate may comprise a metal such as copper or titanium or a ceramic material such as a glass. A carrier substrate may also include additional components such as fillers, binders, and/or surfactants.

A carrier substrate may have any suitable thickness. For instance, the thickness of a carrier substrate may greater than or equal to about 5 microns, greater than or equal to about 15 microns, greater than or equal to about 25 microns, greater than or equal to about 50 microns, greater than or equal to about 75 microns, greater than or equal to about 100 microns, greater than or equal to about 200 microns, greater than or equal to about 500 microns, or greater than or equal to about 1 mm. In some embodiments, the carrier substrate may have a thickness of less than or equal to about 10 mm, less than or equal to about 5 mm, less than or equal to about 3 mm, or less than or equal to about 1 mm. Combinations of the above-referenced ranges are also possible (e.g., greater than or equal to about 100 microns and less than or equal to about 1 mm.) Other ranges are also possible. In some cases, the carrier substrate has a thickness that is equal to or greater than the thickness of the release layer.

In the depicted embodiments shown in Figs. 4A and 4B, release layer 16 may have a relatively high adhesive strength to one of carrier substrate 14 and protective layer 8 or electroactive material layer 4, and a relatively moderate or poor adhesive strength to the other of carrier substrate 14 and protective layer 8 or electroactive material layer 4. Consequently, the release layer can function to facilitate the delamination of carrier substrate from the final electrode structure when a peel force is applied to either the carrier substrate and/or to the electrode structure.

Depending on which component the release layer shows a relatively high adhesive strength to, the release layer may, or may not be, incorporated within the final electrode structure. Whether or not the release layer is incorporated into the final electrode structure can be varied by tailoring the chemical and/or physical properties of the release layer. For example, if it is desirable for release layer 16 to be part of the final electrode structure, the release layer may be tailored to have a greater adhesive strength to protective layer 8 relative to its adhesive strength to carrier substrate 14. Consequently, when a delamination force is applied to the carrier substrate (and/or to the electrode structure), carrier substrate 14 is delaminated from the electrode structure and release layer 16 is retained with the electrode structure (see Fig. 4C).

In embodiments in which the release layer is incorporated into a final electrochemical cell, the release layer may be formed of a material that is stable in the electrolyte and does not substantially interfere with the structural integrity of the electrode. In certain embodiments in which the release layer is incorporated into the final electrode structure or electrochemical cell, the release layer may serve as an electrolyte (e.g., a polymer gel electrolyte) to facilitate the conduction of ions, or it may function as a separator. Other uses of the release layer are also possible. In certain particular embodiments, the release layer is formed of a polymer gel that is conductive to lithium ions and/or contains lithium ions.

On the other hand, if it is desirable for the release layer to not be part of a final electrode structure, the release layer may be designed to have a greater adhesive strength to carrier substrate 14 relative to its adhesive strength to protective layer 8 or the electroactive material layer 4. In such an embodiment, when a delamination force is applied to the carrier substrate, carrier substrate 14 and release layer 16 are delaminated from the electrode structure resulting in a structure similar to that of Figs. 1 and 2.

The release layer may be formed using any appropriate material exhibiting the desired release properties relative to the carrier substrate and protective layer and conductivity. The specific material to be used will depend, at least in part, on factors such as the particular type of carrier substrate used, the material in contact with the other side of the release layer, whether the release layer is to be incorporated into the final electrode structure, and whether the release layer has an additional function after being incorporated into the electrochemical cell.

In one set of embodiments, the release layer is formed of a polymeric material. When polymers are used, the polymer may be substantially crosslinked, substantially uncrosslinked, or partially crosslinked as the current disclosure is not limited in this fashion. Specific examples of appropriate polymers include, but are not limited to, polyoxides, polysulfones, polyalcohols, polyurethanes, polyamides, and perfluorated polymers. The polymer may be in the form of, for example, a solid polymer (e.g., a solid polymer electrolyte), a glassy-state polymer, or a polymer gel.

In some embodiments, the release layer includes a polymer that is conductive to certain ions (e.g., alkali metal ions) but is also substantially electrically conductive. Examples of such materials include electrically conductive polymers (also known as electronic polymers or conductive polymers) that are doped with lithium salts (e.g., LiSCN, LiBr, LiI, LiClO₄, LiAsF₆, LiSO₃CF₃, LiSO₃CH₃, LiBF₄, LiB(Ph)₄, LiPF₆, LiC(SO₂CF₃)₃, and LiN(SO₂CF₃)₂). Conductive polymers are known in the art; examples of such polymers include, but are not limited to, poly(acetylene)s, poly(pyrrole)s, poly(thiophene)s, poly(aniline)s, poly(fluorene)s, polynaphthalenes, poly(p-phenylene sulfide), and poly(para-phenylene vinylene)s. Electrically-conductive additives may also be added to polymers to form electrically-conductive polymers.

In some embodiments, a release layer includes a polymer that is conductive to one or more types of ions. In some cases, the release layer may be substantially non-electrically conductive. Examples of ion-conductive species (that may be substantially non-electrically conductive) include non-electrically conductive materials (e.g., electrically insulating materials) that are doped with lithium salts. E.g., acrylate, polyethyleneoxide, silicones, polyvinylchlorides, and other insulating polymers that are doped with lithium salts can be ion-conductive (but substantially non-electrically conductive). Additional examples of polymers include ionically conductive polymers, sulfonated polymers, and hydrocarbon polymers. Suitable ionically conductive polymers may include, e.g., ionically conductive polymers known to be useful in solid polymer electrolytes and gel polymer electrolytes for lithium electrochemical cells, such as, for example, polyethylene oxides. Suitable sulfonated polymers may include, e.g., sulfonated siloxane polymers, sulfonated polystyrene-ethylene-butylene polymers, and sulfonated polystyrene polymers. Suitable hydrocarbon polymers may include, e.g., ethylene-propylene polymers, polystyrene polymers, and the like.

A release layer can also include crosslinked polymer material formed from the polymerization of monomers such as alkyl acrylates, glycol acrylates, polyglycol acrylates, polyglycol vinyl ethers, polyglycol divinyl ethers, and those described in U.S. Patent No. 6,183,901 to Ying et al. of the common assignee for protective coating layers for separator layers. For example, one such crosslinked polymer material is polydivinyl poly(ethylene glycol). The crosslinked polymer materials may further comprise salts, for example, lithium salts, to enhance ionic conductivity.

Other classes of polymers that may be suitable for use in a release layer include, but are not limited to, polyamines (e.g., poly(ethylene imine) and polypropylene imine (PPI)); polyamides (e.g., polyamide (Nylon), poly(ε-caprolactam) (Nylon 6), poly(hexamethylene adipamide) (Nylon 66)), polyimides (e.g., polyimide, polynitrile, and poly(pyromellitimide-1,4-diphenyl ether) (Kapton)); vinyl polymers (e.g., polyacrylamide, poly(2-vinylpyridine), poly(N-vinylpyrrolidone), poly(methylcyanoacrylate), poly(ethylcyanoacrylate), poly(butylcyanoacrylate), poly(isobutylcyanoacrylate), poly(vinyl acetate), poly (vinyl alcohol), poly(vinyl chloride), poly(vinyl fluoride), poly(2-vinyl pyridine), vinyl polymer, polychlorotrifluoro ethylene, and poly(isohexylcynaoacrylate)); polyacetals; polyolefins (e.g., poly(butene-1), poly(n-pentene-2), polypropylene, polytetrafluoroethylene); polyesters (e.g., polycarbonate, polybutylene terephthalate, polyhydroxybutyrate); polyethers (poly(ethylene oxide) (PEO), poly(propylene oxide) (PPO), poly(tetramethylene oxide) (PTMO)); vinylidene polymers (e.g., polyisobutylene, poly(methyl styrene), poly(methylmethacrylate) (PMMA), poly(vinylidene chloride), and poly(vinylidene fluoride)); polyaramides (e.g., poly(imino-1,3-phenylene iminoisophthaloyl) and poly(imino-1,4-phenylene iminoterephthaloyl)); polyheteroaromatic compounds (e.g., polybenzimidazole (PBI), polybenzobisoxazole (PBO) and polybenzobisthiazole (PBT)); polyheterocyclic compounds (e.g., polypyrrole); polyurethanes; phenolic polymers (e.g., phenol-formaldehyde); polyalkynes (e.g., polyacetylene); polydienes (e.g., 1,2-polybutadiene, cis or trans-1,4-polybutadiene); polysiloxanes (e.g., poly(dimethylsiloxane) (PDMS), poly(diethylsiloxane) (PDES), polydiphenylsiloxane (PDPS), and polymethylphenylsiloxane (PMPS)); and inorganic polymers (e.g., polyphosphazene, polyphosphonate, polysilanes, polysilazanes).

The polymer materials listed above and described herein may further comprise salts, for example, lithium salts (e.g., LiSCN, LiBr, LiI, LiClO₄, LiAsF₆, LiSO₃CF₃, LiSO₃CH₃, LiBF₄, LiB(Ph)₄, LiPF₆, LiC(SO₂CF₃)₃, and LiN(SO₂CF₃)₂), to enhance ionic conductivity.

Other criteria for selecting a material suitable for a release layer, tests for adequate adhesion of the release layer, and methods for forming a release layer are described in more detail in U.S. Patent Apl. Serial No: 12/862,513, filed on August 24, 2010, published as U.S. Pub. No. 2011/068001, entitled "Release System for Electrochemical Cells".

In embodiments in which the release layer is incorporated into the final electrode structure, it may be desirable to provide a release layer capable of functioning as a separator within an electrochemical cell. In such an embodiment, the release layer is conductive to the electroactive species of the electrochemical cell. Conductivity of the release layer may, for example, be provided either through intrinsic conductivity of the material in the dry state, or the release layer may comprise a polymer that is capable of being swollen by an electrolyte to form a gel polymer exhibiting conductivity in the wet state. While materials exhibiting any amount of ion conductivity could be used in such an embodiment, in some embodiments, the release layer is made from a material that may exhibit ion conductivities of, e.g., greater than or equal to about 10⁻⁷ S/cm, greater than or equal to about 10⁻⁶ S/cm, greater than or equal to about 10⁻⁵ S/cm, greater than or equal to about 10⁻⁴ S/cm, or any other appropriate ion conductivity in either the dry or wet state. Correspondingly, the release layer may exhibit ion conductivities of less than or equal to about 10⁻³ S/cm, less than or equal to about 10⁻⁴ S/cm, less than or equal to about 10⁻⁵ S/cm, less than or equal to about 10⁻⁶, or any other appropriate ion conductivity in either the dry or wet state. Combinations of the above are possible (e.g., an ion conductivity of greater than or equal to about 10⁻⁶ S/cm and less than or equal to about 10⁻³ S/cm). Other ranges are also possible.

In certain embodiments in which the release layer is incorporated into the final electrode structure and/or electrochemical cell, the release layer is designed to have the ability to withstand the application of a force or pressure applied to the electrochemical cell or a component of the cell during cycling of the cell. The pressure may be an externally-applied (e.g., in some embodiments, uniaxial) pressure. The externally-applied pressure may, in some embodiments, be chosen to be greater than the yield stress of a material forming the electroactive material layer. For example, in embodiments in which the electroactive material layer comprises lithium, the applied pressure applied to the cell may be greater than or equal to about 5 kg/cm². In some embodiments, the applied pressure may be greater than or equal to about 5 kg/cm², greater than or equal to about 6 kg/cm², greater than or equal to about 7 kg/cm2, greater than or equal to about 8 kg/cm², greater than or equal to about 9 kg/cm², or any other appropriate pressure. Correspondingly, the applied pressure may be less than or equal to about 20 kg/cm², less than or equal to about 10 kg/cm², less than or equal to about 9 kg/cm², less than or equal to about 8 kg/cm², less than or equal to about 7 kg/cm², less than or equal to about 6 kg/cm², or any other appropriate pressure. Combinations of the above are possible (e.g. an applied pressure of greater than or equal to about 5 kg/cm² and less than or equal to about 10 kg/cm²). Other ranges are also possible. Suitable structures for applying an appropriate pressure to the electrochemical cell are described in more detail in U.S. Patent Apl. Serial No: 12/862,528, filed on August 24, 2010, published as U.S. Pub. No. 2011/0177398, entitled "Electrochemical Cell".

The electrode structures described above may generally be used as anodes. Corresponding suitable cathode active materials for use in the cathode of the electrochemical cells described herein include, but are not limited to, electroactive transition metal chalcogenides, electroactive conductive polymers, and electroactive sulfur-containing materials, and combinations thereof. As used herein, the term "chalcogenides" pertains to compounds that contain one or more of the elements of oxygen, sulfur, and selenium. Examples of suitable transition metal chalcogenides include, but are not limited to, the electroactive oxides, sulfides, and selenides of transition metals selected from the group consisting of Mn, V, Cr, Ti, Fe, Co, Ni, Cu, Y, Zr, Nb, Mo, Ru, Rh, Pd, Ag, Hf, Ta, W, Re, Os, and Ir. In one embodiment, the transition metal chalcogenide is selected from the group consisting of the electroactive oxides of nickel, manganese, cobalt, and vanadium, and the electroactive sulfides of iron. In one embodiment, the cathode active layer comprises an electroactive conductive polymer. Examples of suitable electroactive conductive polymers include, but are not limited to, electroactive and electronically conductive polymers selected from the group consisting ofpolypyrroles, polyanilines, polyphenylenes, polythiophenes, and polyacetylenes.

"Electroactive sulfur-containing materials," as used herein, relates to cathode active materials which comprise the element sulfur in any form, wherein the electrochemical activity involves the breaking or forming of sulfur-sulfur covalent bonds. Suitable electroactive sulfur-containing materials, include, but are not limited to, elemental sulfur and organic materials comprising sulfur atoms and carbon atoms, which may or may not be polymeric. Suitable organic materials include those further comprising heteroatoms, conductive polymer segments, composites, and conductive polymers.

In some embodiments involving Li/S systems, the sulfur-containing material, in its oxidized form, comprises a polysulfide moiety, Sₘ, selected from the group consisting of covalent -Sₘ- moieties, ionic -Sₘ- moieties, and ionic Sₘ²-moieties, wherein m is an integer equal to or greater than 3. In one embodiment, m of the polysulfide moiety, Sₘ, of the sulfur-containing polymer is an integer equal to or greater than 6. In another embodiment, m of the polysulfide moiety, Sₘ, of the sulfur-containing polymer is an integer equal to or greater than 8. In another embodiment, the sulfur-containing material is a sulfur-containing polymer. In another embodiment, the sulfur-containing polymer has a polymer backbone chain and the polysulfide moiety, Sₘ, is covalently bonded by one or both of its terminal sulfur atoms as a side group to the polymer backbone chain. In yet another embodiment, the sulfur-containing polymer has a polymer backbone chain and the polysulfide moiety, Sₘ, is incorporated into the polymer backbone chain by covalent bonding of the terminal sulfur atoms of the polysulfide moiety.

In one embodiment, the electroactive sulfur-containing material comprises greater than 50% by weight of sulfur. In another embodiment, the electroactive sulfur-containing material comprises greater than 75% by weight of sulfur. In yet another embodiment, the electroactive sulfur-containing material comprises greater than 90% by weight of sulfur.

The nature of the electroactive sulfur-containing materials useful in the practice of this invention may vary widely, as known in the art. In one embodiment, the electroactive sulfur-containing material comprises elemental sulfur. In another embodiment, the electroactive sulfur-containing material comprises a mixture of elemental sulfur and a sulfur-containing polymer.

In other embodiments, an electrochemical cell described herein includes a composite cathode. The composite cathode may include, for example, (a) an electroactive sulfur-containing cathode material, wherein said electroactive sulfur-containing cathode material, in its oxidized state, comprises a polysulfide moiety of the formula -Sₘ-, wherein m is an integer equal to or greater than 3, as described herein; and, (b) an electroactive transition metal chalcogenide composition. The electroactive transition metal chalcogenide composition may encapsulate the electroactive sulfur-containing cathode material. In some cases, it may retard the transport of anionic reduction products of the electroactive sulfur-containing cathode material. The electroactive transition metal chalcogenide composition may comprising an electroactive transition metal chalcogenide having the formula: MⱼYₖ(OR)₁, wherein M is a transition metal; Y is the same or different at each occurrence and is oxygen, sulfur, or selenium; R is an organic group and is the same or different at each occurrence; j is an integer ranging from 1 to 12; k is a number ranging from 0 to 72; and 1 is a number ranging from 0 to 72. In some embodiments, k and 1 cannot both be 0.

In order to retard out-diffusion of anionic reduction products from the cathode compartment in the cell, a sulfur-containing cathode material may be effectively separated from the electrolyte or other layers or parts of the cell by a layer of an electroactive transition metal chalcogenide composition. This layer can be dense or porous.

In one embodiment, a cathode includes a mixture of an electroactive sulfur-containing cathode material, an electroactive transition metal chalcogenide, and optionally binders, electrolytes, and conductive additives, which is deposited onto a current collector. In another embodiment, a coating of the electroactive sulfur-containing cathode material is encapsulated or impregnated by a thin coherent film coating of the cation transporting, anionic reduction product transport-retarding, transition metal chalcogenide composition. In yet another embodiment, a cathode includes particulate electroactive sulfur-containing cathode materials individually coated with an encapsulating layer of the cation transporting, anionic reduction product transport-retarding, transition metal chalcogenide composition. Other configurations are also possible.

In one embodiment, a composite cathode includes particulate sulfur-containing cathode materials, generally less than 10 microns in diameter, individually coated with an encapsulating layer of an alkali-metal cation-transporting, yet anionic reduction product transport-retarding electroactive transition metal chalcogenide composition. The particle may have a "core-shell" configuration, e.g., a core of an electroactive sulfur-containing cathode material and an outer shell of a retarding barrier layer comprising an electroactive transition metal chalcogenide. Optionally, the composite cathode may contain fillers comprising various types of binders, electrolytes and conductive materials such as those described herein.

In certain embodiments, the composite cathode is a particulate, porous electroactive transition metal chalcogenide composition, optionally containing non-electroactive metal oxides, such as silica, alumina, and silicates, that is further impregnated with a soluble electroactive sulfur-containing cathode material. This may be beneficial in increasing the energy density and capacity compared with cathodes including electroactive sulfur-containing cathode material (e.g., electroactive organo-sulfur and carbon-sulfur cathode materials) only.

In one set of embodiments, a composite cathode comprises an electroactive sulfur-containing material (e.g., a carbon-sulfur polymer or elemental sulfur); V₂O₅; conductive carbon; and a PEO binder.

Additional arrangements, components, and advantages of composite cathodes are described in more detail in U.S. Pub. No.: 2006/0115579, filed January 13, 2006, entitled "Novel composite cathodes, electrochemical cells comprising novel composite cathodes, and processes for fabricating same".

Cathodes may further comprise one or more conductive fillers to provide enhanced electronic conductivity. Conductive fillers can increase the electrically conductive properties of a material and may include, for example, conductive carbons such as carbon black (e.g., Vulcan XC72R carbon black, Printex XE2, or Akzo Nobel Ketjen EC-600 JD), graphite fibers, graphite fibrils, graphite powder (e.g., Fluka #50870), activated carbon fibers, carbon fabrics, non-activated carbon nanofibers. Other non-limiting examples of conductive fillers include metal coated glass particles, metal particles, metal fibers, nanoparticles, nanotubes, nanowires, metal flakes, metal powders, metal fibers, metal mesh. In some embodiments, a conductive filler may include a conductive polymer. Examples of suitable electroactive conductive polymers include, but are not limited to, electroactive and electronically conductive polymers selected from the group consisting of polypyrroles, polyanilines, polyphenylenes, polythiophenes, and polyacetylenes. Other conductive materials known to those of ordinary skill in the art can also be used as conductive fillers. The amount of conductive filler, if present, may be present in the range of 2 to 30% by weight of the cathode active layer. The cathodes may also further comprise other additives including, but not limited to, metal oxides, aluminas, silicas, and transition metal chalcogenides.

Cathodes may also comprise a binder. The choice of binder material may vary widely so long as it is inert with respect to the other materials in the cathode. In some embodiments, the binder material may be a polymeric material. Examples of polymer binder materials include, but are not limited to, polyvinylidene fluoride (PVDF)-based polymers, such as poly(vinylidene fluoride) (PVDF), PVF2 and its co- and terpolymers with hexafluoroethylene, tetrafluoroethylene, chlorotrifluoroethylene, poly(vinyl fluoride), polytetrafluoroethylenes (PTFE), ethylene-tetrafluoroethylene copolymers (ETFE), polybutadiene, cyanoethyl cellulose, carboxymethyl cellulose and its blends with styrene-butadiene rubber, polyacrylonitrile, ethylene-propylene-diene (EPDM) rubbers, ethylene propylene diene terpolymers, styrene-butadiene rubbers (SBR), polyimides or ethylene-vinyl acetate copolymers. In some cases, the binder material may be substantially soluble in aqueous fluid carriers and may include, but is not limited to, cellulose derivatives, typically methylcellulose (MC), carboxy methylcellulose (CMC) and hydroxypropyl methylcellulose (HPMC), polyvinyl alcohol (PVA), polyacrylic acid salts, polyacryl amide (PA), polyvinyl pyrrolidone (PVP) and polyethylene oxides (PEO). In one set of embodiments, the binder material is poly(ethylene-co-propylene-co-5-methylene-2-norbornene) (EPMN), which may be chemically neutral (e.g., inert) towards cell components, including polysulfides. UV curable acrylates, UV curable methacrylates, and heat curable divinyl ethers can also be used. The amount of binder, if present, may be present in the range of 2 to 30% by weight of the cathode active layer.

Other suitable cathode materials are also possible. For instance, cathodes for alkali metal ion batteries (e.g., lithium ion batteries) are also possible.

As noted above, the assembled electrochemical cells include electrolyte in addition to the electrodes and other components present within the cell. The electrolytes used in electrochemical cells can function as a medium for the storage and transport of ions, and in the special case of solid electrolytes and gel electrolytes, these materials may additionally function as a separator between the anode and the cathode. Any suitable liquid, solid, or gel material capable of storing and transporting ions between the anode and the cathode may be used. The electrolyte may be electronically non-conductive to prevent short circuiting between the anode and the cathode. In one set of embodiments a non-aqueous-based electrolyte is used; in another set of embodiments, an aqueous-based electrolyte is used.

In some embodiments, an electrolyte may be present as a polymer layer such as a gel or solid polymer layer. In some cases, in addition to being able to function as a medium for the storage and transport of ions, a polymer layer positioned between an anode and cathode can function to screen the anode (e.g., a base electrode layer of the anode) from any cathode roughness under an applied force or pressure, keeping the anode surface smooth under force or pressure, and stabilizing any multi-layered structures of the anode (e.g., ceramic polymer multi-layer) by keeping the multi-layer pressed between the base electrode layer and the smooth polymer layer. In some such embodiments, the polymer layer may be chosen to be compliant and have a smooth surface.

The electrolyte can comprise one or more ionic electrolyte salts to provide ionic conductivity and one or more liquid electrolyte solvents, gel polymer materials, or polymer materials. Suitable non-aqueous electrolytes may include organic electrolytes comprising one or more materials selected from the group consisting of liquid electrolytes, gel polymer electrolytes, and solid polymer electrolytes. Examples of non-aqueous electrolytes for lithium batteries are described by Dorniney in Lithium Batteries, New Materials, Developments and Perspectives, Chapter 4, pp. 137-165, Elsevier, Amsterdam (1994). Examples of gel polymer electrolytes and solid polymer electrolytes are described by Alamgir et al. in Lithium Batteries, New Materials, Developments and Perspectives, Chapter 3, pp. 93-136, Elsevier, Amsterdam (1994).

Examples of useful non-aqueous liquid electrolyte solvents include, but are not limited to, non-aqueous organic solvents, such as, for example, N-methyl acetamide, acetonitrile, acetals, ketals, esters, carbonates, sulfones, sulfites, sulfolanes, aliphatic ethers, acyclic ethers, cyclic ethers, glymes, polyethers, phosphate esters, siloxanes, dioxolanes, N-alkylpyrrolidones, substituted forms of the foregoing, and blends thereof. Examples of acyclic ethers that may be used include, but are not limited to, diethyl ether, dipropyl ether, dibutyl ether, dimethoxymethane, trimethoxymethane, dimethoxyethane, diethoxyethane, 1,2-dimethoxypropane, and 1,3-dimethoxypropane. Examples of cyclic ethers that may be used include, but are not limited to, tetrahydrofuran, tetrahydropyran, 2-methyltetrahydrofuran, 1,4-dioxane, 1,3-dioxolane, and trioxane. Examples of polyethers that may be used include, but are not limited to, diethylene glycol dimethyl ether (diglyme), triethylene glycol dimethyl ether (triglyme), tetraethylene glycol dimethyl ether (tetraglyme), higher glymes, ethylene glycol divinylether, diethylene glycol divinylether, triethylene glycol divinylether, dipropylene glycol dimethyl ether, and butylene glycol ethers. Examples of sulfones that may be used include, but are not limited to, sulfolane, 3-methyl sulfolane, and 3-sulfolene. Fluorinated derivatives of the foregoing are also useful as liquid electrolyte solvents. Mixtures of the solvents described herein can also be used.

In some embodiments, specific liquid electrolyte solvents that may be favorable towards the anode (e.g., have relatively low reactivity towards lithium, good lithium ion conductivity, and/or relatively low polysulfide solubility) include, but are not limited to 1,1-dimethoxyethane (1,1-DME), 1,1-diethoxyethane, 1,2-diethoxyethane, diethoxymethane, dibutyl ether, anisole or methoxybenzene, veratrole or 1,2-dimethoxybenzene, 1,3-dimethoxybenzene, t-butoxyethoxyethane, 2,5-dimethoxytetrahydrofurane, cyclopentanone ethylene ketal, and combinations thereof. Specific liquid electrolyte solvents that may be favorable towards the cathode (e.g., have relatively high polysulfide solubility, and/or can enable high rate capability and/or high sulfur utilization) include, but are not limited to dimethoxyethane (DME, 1,2-dimethoxyethane) or glyme, diglyme, triglyme, tetraglyme, polyglymes, sulfolane, 1,3-dioxolane (DOL), tetrahydrofuran (THF), acetonitrile, and combinations thereof.

Specific mixtures of solvents include, but are not limited to 1,3-dioxolane and dimethoxyethane, 1,3-dioxolane and diethyleneglycol dimethyl ether, 1,3-dioxolane and triethyleneglycol dimethyl ether, and 1,3-dioxolane and sulfolane. The weight ratio of the two solvents in the mixtures may vary from about 5 to 95 to 95 to 5. In some embodiments, a solvent mixture comprises dioxolanes (e.g., greater than 40% by weight of dioxolanes).

In some cases, aqueous solvents can be used as electrolytes for lithium cells. Aqueous solvents can include water, which can contain other components such as ionic salts. In some embodiments, the electrolyte can include species such as lithium hydroxide, or other species rendering the electrolyte basic, so as to reduce the concentration of hydrogen ions in the electrolyte.

Liquid electrolyte solvents can also be useful as plasticizers for gel polymer electrolytes. Examples of useful gel polymer electrolytes include, but are not limited to, those comprising one or more polymers selected from the group consisting of polyethylene oxides, polypropylene oxides, polyacrylonitriles, polysiloxanes, polyimides, polyphosphazenes, polyethers, sulfonated polyimides, perfluorinated membranes (NAFION resins), polydivinyl polyethylene glycols, polyethylene glycol diacrylates, polyethylene glycol dimethacrylates, derivatives of the foregoing, copolymers of the foregoing, crosslinked and network structures of the foregoing, and blends of the foregoing, and optionally, one or more plasticizers.

Examples of useful solid polymer electrolytes include, but are not limited to, those comprising one or more polymers selected from the group consisting of polyethers, polyethylene oxides, polypropylene oxides, polyimides, polyphosphazenes, polyacrylonitriles, polysiloxanes, derivatives of the foregoing, copolymers of the foregoing, crosslinked and network structures of the foregoing, and blends of the foregoing.

In addition to electrolyte solvents, gelling agents, and polymers as known in the art for forming electrolytes may further comprise one or more ionic electrolyte salts, also as known in the art, to increase the ionic conductivity. Examples of ionic electrolyte salts for use in the electrolytes described herein include, but are not limited to, LiSCN, LiBr, LiI, LiClO4, LiAsF₆, LiSO₃CF₃, LiSO₃CH₃, LiBF₄, LiB(Ph)₄, LiPF₆, LiC(SO₂CF₃)₃, and LiN(SO₂CF₃)₂. Other electrolyte salts that may be useful include lithium polysulfides (Li2Sₓ), and lithium salts of organic ionic polysulfides (LiSₓR)ₙ, where x is an integer from 1 to 20, n is an integer from 1 to 3, and R is an organic group, and those disclosed in U.S. Patent No. 5,538,812 to Lee et al. A range of concentrations of the ionic lithium salts in the solvent may be used such as from about 0.2 m to about 2.0 m (m is moles/kg of solvent). In some embodiments, a concentration in the range between about 0.5 m to about 1.5 m is used. The addition of ionic lithium salts to the solvent is optional in that upon discharge of Li/S cells the lithium sulfides or polysulfides formed typically provide ionic conductivity to the electrolyte, which may make the addition of ionic lithium salts unnecessary. Furthermore, if an ionic N-O additive such as an inorganic nitrate, organic nitrate, or inorganic nitrite is used, it may provide ionic conductivity to the electrolyte in which case no additional ionic lithium electrolyte salts may be needed.

As noted previously a heterogeneous electrolyte may be used in an electrochemical cell including the currently disclosed electrode structures. As used herein, a "heterogeneous electrolyte" is an electrolyte including at least two different liquid solvents (referred to herein as first and second electrolyte solvents, or anode-side and cathode-side electrolyte solvents). The two different liquid solvents may be miscible or immiscible with one another, although in many aspects, many electrolyte systems include one or more solvents that are immiscible (or can be made immiscible within the cell) to the extent that they will largely separate and at least one can be isolated from at least one component of the cell. A heterogeneous electrolyte may be in the form of a liquid, a gel, or a combination thereof. Specific examples of heterogeneous electrolytes are provided below.

As certain embodiments described herein involve a heterogeneous electrolyte having at least two electrolyte solvents that can partition during operation of the electrochemical cell, one goal may be to prevent or decrease the likelihood of spontaneous solvent mixing, i.e., generation of an emulsion of two immiscible liquids. This may be achieved in some embodiments by "immobilizing" at least one electrolyte solvent at an electrode (e.g., an anode) by forming, for example, a polymer gel electrolyte, glassy-state polymer, or a higher viscosity liquid that resides disproportionately at that electrode.

In one embodiment, suitable electrolytes for the heterogeneous electrolyte include a first electrolyte solvent (e.g., dioxolane (DOL)) that partitions towards the anode and is favorable towards the anode (referred to herein as an "anode-side electrolyte solvent") and a second electrolyte solvent (e.g., 1,2-dimethoxyethane (DME)) that partitions towards the cathode and is favorable towards the cathode (and referred to herein as an "cathode-side electrolyte solvent"). In some embodiments, the anode-side electrolyte solvent has a relatively lower reactivity towards lithium metal and may be less soluble to polysulfides (e.g., Li₂Sₓ, where x > 2) than the cathode-side electrolyte solvent. The cathode-side electrolyte solvent may have a relatively higher solubility towards polysulfides, but may be more reactive towards lithium metal. By separating the electrolyte solvents during operation of the electrochemical cell such that the anode-side electrolyte solvent is present disproportionately at the anode and the cathode-side electrolyte solvent is present disproportionately at the cathode, the electrochemical cell can benefit from desirable characteristics of both electrolyte solvents (e.g., relatively low lithium reactivity of the anode-side electrolyte solvent and relatively high polysulfide solubility of the cathode-side electrolyte solvent). Specifically, anode consumption can be decreased, buildup of insoluble polysulfides (i.e., "slate", lower-order polysulfides such as Li₂Sₓ, where x < 3, e.g., Li₂S₂ and Li₂S) at the cathode can be decreased, and as a result, the electrochemical cell may have a longer cycle life. Furthermore, the batteries described herein may have a high specific energy (e.g., greater than 400 Wh/kg), improved safety, and/or may be operable at a wide range of temperatures (e.g., from -70 °C to +75 °C). Disproportionate presence of one species or solvent, verses another, at a particular location in a cell means that the first species or solvent is present, at that location (e.g., at a surface of a cell electrode) in at least a 2:1 molar or weight ratio, or even a 5:1, 10:1, 50:1, or 100:1 or greater ratio.

In some embodiments, electrochemical cells may further comprise a separator interposed between the cathode and anode. The separator may be a solid non-conductive or insulative material which separates or insulates the anode and the cathode from each other preventing short circuiting, and which permits the transport of ions between the anode and the cathode.

The pores of the separator may be partially or substantially filled with electrolyte. Separators may be supplied as porous free standing films which are interleaved with the anodes and the cathodes during the fabrication of cells. Alternatively, the porous separator layer may be applied directly to the surface of one of the electrodes, for example, as described in PCT Publication No. WO 99/33125 to Carlson et al. and in U.S. Patent No. 5,194,341 to Bagley et al.

A variety of separator materials are known in the art. Examples of suitable solid porous separator materials include, but are not limited to, polyolefins, such as, for example, polyethylenes and polypropylenes, glass fiber filter papers, and ceramic materials. Further examples of separators and separator materials suitable for use in this invention are those comprising a microporous xerogel layer, for example, a microporous pseudo-boehmite layer, which may be provided either as a free standing film or by a direct coating application on one of the electrodes, as described in U.S. patent application Ser. Nos. 08/995,089 and 09/215,112 by Carlson et al. of the common assignee. Solid electrolytes and gel electrolytes may also function as a separator in addition to their electrolyte function.

In some embodiments, the application of a force normal to the electroactive surfaces within the electrochemical cell may reduce and/or prevent depletion of active materials due to undesired side reactions such as mossy lithium growth, dendritic formation, and other applicable side reactions. Correspondingly, the application of a normal force to the electroactive surface may reduce and/or eliminate the need for the inclusion of large amounts of anode active material and/or electrolyte within the electrochemical cell. By reducing and/or eliminating the need to accommodate for active material loss during charge-discharge of the cell, smaller amounts of anode active material may be used to fabricate cells and devices. The force may be applied to the exterior of a cell or to the internal components of a cell using any number of different configurations including, for example, the embodiments described below. Examples of structures that could be used to apply a suitable force are described in more detail in U.S. Patent Apl. Serial No.: 12/535,328, filed August 4, 2009, published as U.S. Pub. No. 2010/0035128, and entitled "Application of Force In Electrochemical Cells"; U.S. Patent Apl. Serial No.: 12/727,862, filed March 19, 2010, entitled "Cathode for Lithium Battery".

The following documents are referred to: U.S. Patent No. 7,247,408, filed May 23, 2001, entitled "Lithium Anodes for Electrochemical Cells"; U.S. Patent No. 5,648,187, filed March 19, 1996, entitled "Stabilized Anode for Lithium-Polymer Batteries"; U.S. Patent No. 5,961,672, filed July 7, 1997, entitled "Stabilized Anode for Lithium-Polymer Batteries"; U.S. Patent No. 5,919,587, filed May 21, 1997, entitled "Novel Composite Cathodes, Electrochemical Cells Comprising Novel Composite Cathodes, and Processes for Fabricating Same"; U.S. Patent Apl. Serial No.: 11/400,781, filed April 6, 2006, published as U. S. Pub. No. 2007-0221265, and entitled "Rechargeable Lithium/Water, Lithium/Air Batteries"; International Patent Apl. Serial No.: PCT/US2008/009158, filed July 29, 2008, published as International Pub. No. WO/2009017726, and entitled "Swelling Inhibition in Lithium Batteries"; U.S. Patent Apl. Serial No.: 12/312,764, filed May 26, 2009, , published as U.S. Pub. No. 2010-0129699, and entitled "Separation of Electrolytes"; International Patent Apl. Serial No.: PCT/US2008/012042, filed October 23, 2008, published as International Pub. No. WO/2009054987, and entitled "Primer for Battery Electrode"; U.S. Patent Apl. Serial No.: 12/069,335, filed February 8, 2008, , published as U.S. Pub. No. 2009-0200986, and entitled "Protective Circuit for Energy-Storage Device"; U.S. Patent Apl. Serial No.: 11/400,025, filed April 6, 2006, published as U.S. Pub. No. 2007-0224502, and entitled "Electrode Protection in both Aqueous and Non-Aqueous Electrochemical Cells, including Rechargeable Lithium Batteries"; U.S. Patent Apl. Serial No.: 11/821,576, filed June 22, 2007, published as U.S. Pub. No. 2008/0318128, and entitled "Lithium Alloy/Sulfur Batteries"; Patent Apl. Serial No.: 11/111,262, filed April 20, 2005, , published as U.S. Pub. No. 2006-0238203, and entitled "Lithium Sulfur Rechargeable Battery Fuel Gauge Systems and Methods"; U.S. Patent Apl. Serial No.: 11/728,197, filed March 23, 2007, published as U.S. Pub. No. 2008-0187663, and entitled "Co-Flash Evaporation of Polymerizable Monomers and Non-Polymerizable Carrier Solvent/Salt Mixtures/Solutions"; International Patent Apl. Serial No.: PCT/US2008/010894, filed September 19, 2008, published as International Pub. No. WO/2009042071, and entitled "Electrolyte Additives for Lithium Batteries and Related Methods"; International Patent Apl. Serial No.: PCT/US2009/000090, filed January 8, 2009, published as International Pub. No. WO/2009/089018, and entitled "Porous Electrodes and Associated Methods"; U.S. Patent Apl. Serial No.: 12/535,328, filed August 4, 2009, published as U.S. Pub. No. 2010/0035128, and entitled "Application of Force In Electrochemical Cells"; U.S. Patent Apl. Serial No.: 12/727,862, filed March 19, 2010, entitled "Cathode for Lithium Battery"; U.S. Patent Apl. Serial No.: 12,471,095, filed May 22, 2009, entitled "Hermetic Sample Holder and Method for Performing Microanalysis Under Controlled Atmosphere Environment"; U.S. Patent Apl. Serial No. 12/862,513, filed on August 24, 2010, entitled "Release System for Electrochemical cells (which claims priority to Provisional Patent Apl. Serial No: 61/236,322, filed August 24, 2009, entitled "Release System for Electrochemical Cells"); U.S. Provisional Patent Apl. Serial No: 61/376,554, filed on August 24, 2010, entitled "Electrically Non-Conductive Materials for Electrochemical Cells;" U.S. Patent Apl. Serial No: 12/862,528, filed on August 24, 2010, published as U.S. Pub. No. 2011/0177398, entitled "Electrochemical Cell;" U.S. Patent Apl. Serial No. 12/862,563, filed on August 24, 2010, published as U.S. Pub. No. 2011/0070494, entitled "Electrochemical Cells Comprising Porous Structures Comprising Sulfur" [S1583.70029US00]; U.S. Patent Apl. Serial No. 12/862,551, filed on August 24, 2010, published as U.S. Pub. No. 2011/0070491, entitled "Electrochemical Cells Comprising Porous Structures Comprising Sulfur" [S1583.70030US00]; U.S. Patent Apl. Serial No. 12/862,576, filed on August 24, 2010, published as U.S. Pub. No. 2011/0059361, entitled "Electrochemical Cells Comprising Porous Structures Comprising Sulfur" [S1583.70031US00]; U.S. Patent Apl. Serial No. 12/862,581, filed on August 24, 2010, published as U.S. Pub. No. 2011/0076560, entitled "Electrochemical Cells Comprising Porous Structures Comprising Sulfur" [S1583.70024US01]; U.S. Patent Apl. Serial No: 13/240,113, filed on September 22, 2011, published as U.S. Pub. No. 2012/0070746, entitled "Low Electrolyte Electrochemical Cells" [S1583.70033US01]; U.S. Patent Apl. Serial No: 13/033,419, filed February 23, 2011, published as U.S. Pub. No. 2011/0206992, entitled "Porous Structures for Energy Storage Devices" [S1583.70034US00]; U.S. Patent Apl. Serial No: 13/524,662, filed June 15, 2012, published as U.S. Pub. No. 2013/0017441, entitled "Plating Technique for Electrode" [S1583.70040US01]; U.S. Patent Apl. Serial No: 13/766,862, filed February 14, 2013, entitled "Electrode Structure for Electrochemical Cell" [S1583.70041US01]; and U.S. Patent Apl. Serial No: 13/644,933, filed October 4, 2012, entitled "Electrode Structure and Method for Making the Same" [S1583.70044US01].

### EXAMPLE 1: Lithium Nitride Deposition on Different Substrates

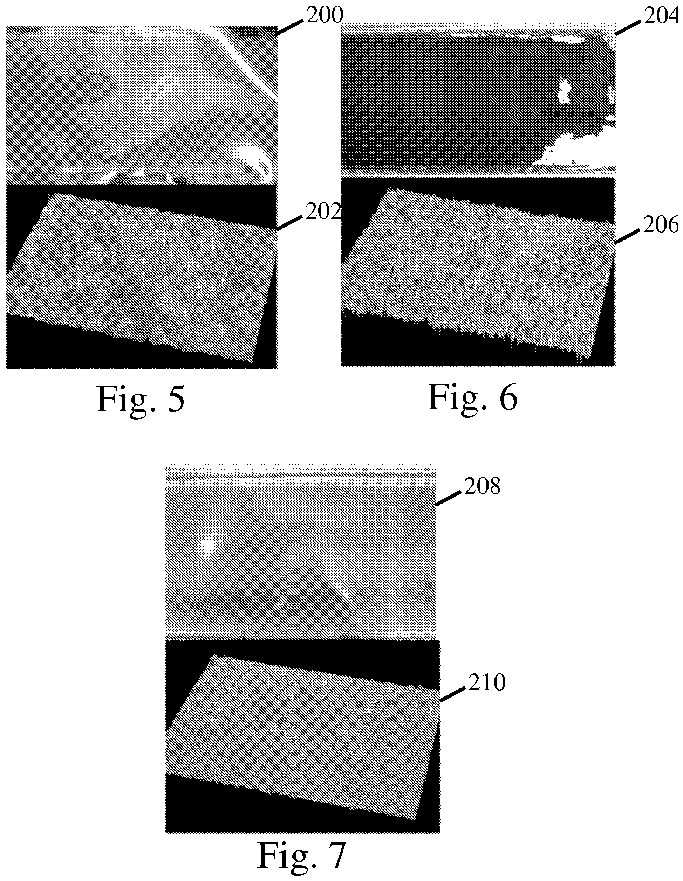

Lithium nitride layers were deposited onto each of: a copper metallized polyethylene terephthalate substrate; 4 µm thick metallic lithium; and a lithium oxide buffer layer with a thickness of less than about 100 nm deposited on top of metallic lithium with a thickness of less than about 2 µm. Deposition of the lithium nitride and lithium oxide layers was performed using reaction of lithium vapor and plasma activated nitrogen gas. An image 200 and three dimensional profilometry image 202 of the lithium nitride layer deposited onto the copper metallized substrate is depicted in Fig. 5. An image 204 and three dimensional profilometry image 206 of the lithium nitride layer deposited directly onto metallic lithium is depicted in Fig. 6. An image 208 and three dimensional profilometry image 210 of the lithium nitride layer deposited on top of the lithium oxide buffer layer is depicted in Fig. 7. The structures shown in Fig. 5 and Fig. 6 are provided for information only and do not form part of the invention.

The lithium nitride layer deposited on the plain metalized substrate formed a substantially continuous and amorphous lithium nitride layer with an arithmetic mean surface roughness (Ra) of about 40 nm, see Fig. 5. In contrast, deposition of the lithium nitride directly onto the untreated metallic lithium led to total conversion of the underlying metallic lithium into polycrystalline porous lithium nitride with an arithmetic mean surface roughness (Ra) of about 400 nm, see Fig. 6. After coating the metallic lithium with a minimum layer of lithium oxide (e.g., a buffer layer), the deposited lithium nitride layer resulted in a less polycrystalline, smoother material with an Ra of about 100 nm, as well as a thickness close to the targeted 200 nm thickness, see Fig. 7.

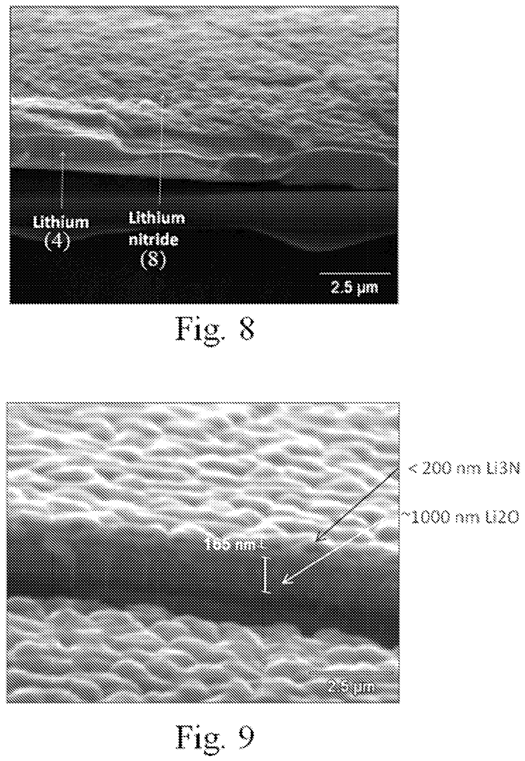

An SEM image of the lithium nitride layer deposited on top of the lithium oxide buffer layer is shown in Fig.8. The figure clearly shows the unreacted lithium 4 located underneath the deposited lithium nitride layer 8. The lithium oxide buffer layer was too thin to image in the depicted figure.

### EXAMPLE 2: Electrode Structure with an Increased Lithium Oxide Thickness

Since the thickness of the lithium oxide buffer layer in the electrode structure of the previous example was too thin to be measured, a further experiment was performed to show that it is the presence and benefit of the buffer layer between the lithium metal layer and lithium nitride layer that prevented conversion of the underlying lithium metal layer. A lithium oxide layer with a thickness of about 1 µm, which is easily measurable by regular techniques (SEM cross section imaging), was coated on a 25 µm thick metallic lithium substrate. A 200 nm coating of lithium nitride was then deposited on top of the lithium oxide layer. As illustrated by Fig. 9, the lithium oxide layer is visible and separates the unreacted metallic lithium substrate from the layer of lithium nitride. Further, the lithium nitride layer had a thickness of close to the targeted 200 nm thickness.

### EXAMPLE 3: Impedance Spectroscopy

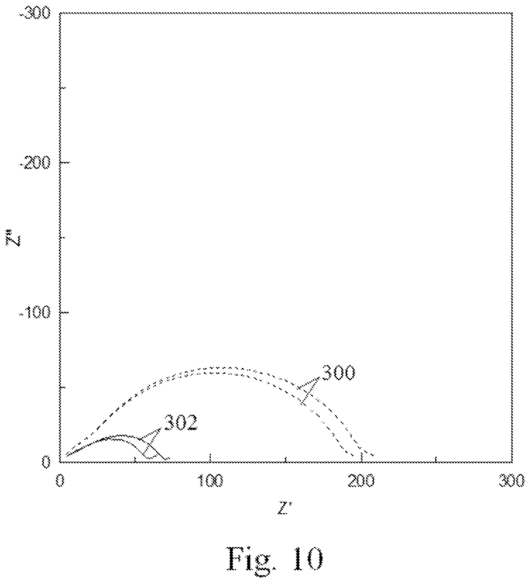

Small flat symmetric lithium-lithium cells were constructed from electrodes including a 200 nm lithium nitride layer on top of a 1 micron buffer oxide layer and 25 microns of lithium metal. Similar cells which do not form part of the invention were constructed using the same materials without the lithium nitride coating (i.e. 1 micron oxide buffer layer on top of 25 microns of lithium metal). The cells were then subjected to impedance spectroscopy testing. Fig. 10 presents the impedance spectroscopy results for the cells not according to the invention, which only include electrodes with an outer layer of lithium oxide deposited on the metallic lithium (see lines 300). Fig. 10 also presents the impedance spectroscopy results for the cells in line with the invention including electrodes with an outer layer of lithium nitride deposited onto the lithium oxide buffer layers and metallic lithium (see lines 302). As illustrated by the figure, the electrode structures incorporating both the lithium nitride and lithium oxide material layers according to the invention had less than about one third of the impedance of the electrode structure including only the lithium oxide. Without wishing to be bound by theory, the lithium nitride coated onto the lithium oxide layer lowers the charge transfer resistance of the resulting electrode structure, which provides the observed decrease in the cell impedance.

### EXAMPLE 4: Buffer Layer Formation using Plasma Treatment

This example does not form part of the invention and is provided for information only. It illustrates the results of forming a buffer layer using a plasma treatment to convert a surface layer of an underlying metallic lithium substrate. The noted plasma treatment can be conducted using an appropriate passivating gas including, for example, N₂O or CO₂. In comparison to the deposition processes noted above, the plasma treatment was expected to result in a relatively thin oxide layer due to the plasma treatment only converting a surface layer of the metallic lithium. As expected, the plasma treatment of the metallic lithium surface converted part of the lithium on the surface into lithium oxide. However, the lithium oxide layer that was formed on the underlying metallic lithium was very thin, porous, and discontinuous. It was noted that this porous and discontinuous lithium oxide layer was unsuitable for use as a buffer layer since the porous and discontinuous nature of the layer would permit a subsequently deposited material to interact with the underlying metallic lithium possibly leading to subsequent conversion of the metallic lithium.

## Claims

1. An electrode structure (2) comprising:
a metallic lithium layer (4);
a substantially continuous and substantially nonporous buffer layer (6) disposed on the metallic lithium layer, wherein the buffer layer is conductive to lithium ions, and wherein the buffer layer comprises a ceramic, a glassy-ceramic, or a glass; and
a substantially continuous and substantially nonporous lithium nitride layer (8) disposed on the buffer layer.

2. The electrode structure as in claim 1,
wherein the lithium nitride layer is formed using a gas, a plasma, a material, or a fluid that is reactive with the metallic lithium layer.

3. A method for forming an electrode structure (2), the method comprising:
providing a metallic lithium layer (4);
depositing a substantially continuous and substantially nonporous buffer layer (6) onto the metallic lithium layer, wherein the buffer layer is conductive to lithium ions, and wherein the buffer layer comprises a ceramic, a glassy-ceramic, or a glass; and
depositing a substantially continuous and substantially nonporous lithium nitride layer (8) onto the buffer layer.

4. The method of claim 3:
wherein the substantially continuous and substantially nonporous lithium nitride layer is deposited onto the buffer layer using a gas, a plasma, a material, or a fluid that is reactive with the metallic lithium layer.

5. The method of any one of claims 3-4, wherein depositing the buffer layer comprises at least one of sputtering, physical vapor deposition, and chemical vapor deposition.

6. The method of any of claims 3-5, wherein depositing the lithium nitride layer comprises at least one of physical vapor deposition, and chemical vapor deposition.

7. The electrode structure of any one of claims 1-2, further comprising a release layer disposed on a surface of at least one of the metallic lithium layer and the lithium nitride layer;
optionally, further comprising a carrier substrate disposed on the release layer.

8. The electrode structure of any one of claims 1, 2, or 7, or the method of any one of claims 3 to 6, wherein:
(a) the buffer layer is disposed directly on the lithium layer, or
(b) the lithium nitride layer is disposed directly on the buffer layer.

9. The electrode structure of any one of claims 1, 2, 7 or 8, or the method of any one of claims 3 to 6 or 8, wherein the buffer layer:
(a) comprises at least one of lithium oxide, lithium phosphorus oxynitride, lithium oxynitride, lithium carbonate, lithium halide, lithium iodide, and lithium bromide, or
(b) comprises lithium, nitrogen, and carbon, or
(c) is a lithium oxide.

10. The electrode structure of any one of claims 1, 2 or 7 to 9, or the method of any one of claims 3 to 6, 8 or 9, wherein the buffer layer:
(a) is substantially amorphous, or
(b) is polycrystalline.

11. The electrode structure of any one of claims 1, 2 or 7 to 10, or the method of any one of claims 3 to 6 or 8 to 10, wherein the buffer layer:
(a) is nonstoichiometric, or
(b) comprises a molar ratio of nitrogen to oxygen that is less than or equal to 3:1 and greater than or equal to 1:2, or
(c) comprises a molar ratio of lithium to carbon in the buffer layer is less than or equal to 2:1 and greater than or equal to 1:1.

12. The electrode structure of any one of claims 1, 2 or 7 to 11, or the method of any one of claims 3 to 6 or 8 to 11, wherein a thickness of the buffer layer is between 100 nm and 1 µm.

13. The electrode structure of any one of claims 1, 2 or 7 to 12, or the method of any one of claims 3 to 6 or 8 to 12, wherein the lithium nitride layer:
(a) is substantially amorphous, or
(b) has a molar ratio of lithium to nitrogen that is less than or equal to 3:1 and greater than or equal to 1:1.

14. The electrode structure of any one of claims 1, 2 or 7 to 13, or the method of any one of claims 3 to 6 or 8 to 13, wherein:
(a) a thickness of the lithium nitride layer is between 2 and 10 times a thickness of the buffer layer, or
(b) the lithium nitride layer has an arithmetic mean surface roughness of less than or equal to 150 nm, or
(c) an arithmetic mean surface roughness (Ra) of the lithium nitride layer is between 50 nm and 150 nm.

15. The electrode structure of any one of claims 1, 2 or 7 to 14, or the method of any one of claims 3 to 6 or 8 to 14, wherein a charge transfer resistance across the lithium nitride layer and buffer layer is less than the charge transfer resistance across the buffer layer without the lithium nitride.

## Patentansprüche

1. Elektrodenstruktur (2), umfassend:
eine metallische Lithiumschicht (4),
eine im Wesentlichen kontinuierliche und im Wesentlichen nicht-poröse Pufferschicht (6), die auf der metallischen Lithiumschicht angeordnet ist, wobei die Pufferschicht gegenüber Lithiumionen leitfähig ist und wobei die Pufferschicht eine Keramik, eine Glaskeramik oder ein Glas umfasst, und
eine im Wesentlichen kontinuierliche und im Wesentlichen nicht-poröse Lithiumnitridschicht (8), die auf der Pufferschicht angeordnet ist.

2. Elektrodenstruktur gemäß Anspruch 1,
wobei die Lithiumnitridschicht unter Verwendung eines Gases, eines Plasmas, eines Materials oder eines Fluids, das gegenüber der metallischen Lithiumschicht reaktiv ist, gebildet ist.

3. Verfahren zur Bildung einer Elektrodenstruktur (2), wobei das Verfahren umfasst:
Bereitstellen einer metallischen Lithiumschicht (4),
Abscheiden einer im Wesentlichen kontinuierlichen und im Wesentlichen nicht-porösen Pufferschicht (6) auf der metallischen Lithiumschicht, wobei die Pufferschicht gegenüber Lithiumionen leitfähig ist und wobei die Pufferschicht eine Keramik, eine Glaskeramik oder ein Glas umfasst, und
Abscheiden einer im Wesentlichen kontinuierlichen und im Wesentlichen nicht-porösen Lithiumnitridschicht (8) auf der Pufferschicht.

4. Verfahren gemäß Anspruch 3,
wobei die im Wesentlichen kontinuierliche und im Wesentlichen nicht-poröse Lithiumnitridschicht auf der Pufferschicht unter Verwendung eines Gases, eines Plasmas, eines Materials oder eines Fluids, das gegenüber der metallischen Lithiumschicht reaktiv ist, abgeschieden wird.

5. Verfahren gemäß irgendeinem der Ansprüche 3 bis 4, wobei das Abscheiden der Pufferschicht mindestens eines von Sputtern, physikalischer Gasphasenabscheidung und chemischer Gasphasenabscheidung umfasst.

6. Verfahren gemäß irgendeinem der Ansprüche 3 bis 5, wobei das Abscheiden der Lithiumnitridschicht mindestens eines von physikalischer Gasphasenabscheidung und chemischer Gasphasenabscheidung umfasst.

7. Elektrodenstruktur gemäß irgendeinem der Ansprüche 1 bis 2, ferner umfassend eine Trennschicht, die auf einer Oberfläche von mindestens einer von der metallischen Lithiumschicht und der Lithiumnitridschicht angeordnet ist,
gegebenenfalls ferner umfassend ein Trägersubstrat, das auf der Trennschicht angeordnet ist.

8. Elektrodenstruktur gemäß irgendeinem der Ansprüche 1, 2 oder 7 oder Verfahren gemäß irgendeinem der Ansprüche 3 bis 6, wobei
(a) die Pufferschicht direkt auf der Lithiumschicht angeordnet ist oder
(b) die Lithiumnitridschicht direkt auf der Pufferschicht angeordnet ist.

9. Elektrodenstruktur gemäß irgendeinem der Ansprüche 1, 2, 7 oder 8 oder Verfahren gemäß irgendeinem der Ansprüche 3 bis 6 oder 8, wobei die Pufferschicht
(a) mindestens eines von Lithiumoxid, Lithiumphosphoroxynitrid, Lithiumoxynitrid, Lithiumcarbonat, Lithiumhalogenid, Lithiumiodid und Lithiumbromid umfasst, oder
(b) Lithium, Stickstoff oder Kohlenstoff umfasst, oder
(c) Lithiumoxid ist.

10. Elektrodenstruktur gemäß irgendeinem der Ansprüche 1, 2 oder 7 bis 9 oder Verfahren gemäß irgendeinem der Ansprüche 3 bis 6, 8 oder 9, wobei die Pufferschicht
(a) im Wesentlichen amorph ist oder
(b) polykristallin ist.

11. Elektrodenstruktur gemäß irgendeinem der Ansprüche 1, 2 oder 7 bis 10 oder Verfahren gemäß irgendeinem der Ansprüche 3 bis 6 oder 8 bis 10, wobei die Pufferschicht
(a) nicht stöchiometrisch ist oder
(b) ein Molverhältnis von Stickstoff zu Sauerstoff umfasst, das kleiner als oder gleich 3:1 und größer als oder gleich 1:2 ist, oder
(c) ein Molverhältnis von Lithium zu Kohlenstoff in der Pufferschicht umfasst, das kleiner als oder gleich 2:1 und größer als oder gleich 1:1 ist.

12. Elektrodenstruktur gemäß irgendeinem der Ansprüche 1, 2 oder 7 bis 11 oder Verfahren gemäß irgendeinem der Ansprüche 3 bis 6 oder 8 bis 11, wobei die Dicke der Pufferschicht zwischen 100 nm und 1 µm beträgt.

13. Elektrodenstruktur gemäß irgendeinem der Ansprüche 1, 2 oder 7 bis 12 oder Verfahren gemäß irgendeinem der Ansprüche 3 bis 6 oder 8 bis 12, wobei die Lithiumnitridschicht
(a) im Wesentlichen amorph ist oder
(b) ein Molverhältnis von Lithium zu Stickstoff aufweist, das kleiner als oder gleich 3:1 und größer als oder gleich 1:1 ist.

14. Elektrodenstruktur gemäß irgendeinem der Ansprüche 1, 2 oder 7 bis 13 oder Verfahren gemäß irgendeinem der Ansprüche 3 bis 6 oder 8 bis 13, wobei
(a) eine Dicke der Lithiumnitridschicht das zwischen 2- und 10-fache einer Dicke der Pufferschicht ist oder
(b) die Lithiumnitridschicht einen arithmetischen Mittenoberflächenrauwert von kleiner als oder gleich 150 nm aufweist oder
(c) ein arithmetischer Mittenoberflächenrauwert (Ra) der Lithiumnitridschicht zwischen 50 nm und 150 nm liegt.

15. Elektrodenstruktur gemäß irgendeinem der Ansprüche 1, 2 oder 7 bis 14 oder Verfahren gemäß irgendeinem der Ansprüche 3 bis 6 oder 8 bis 14, wobei ein Durchtrittswiderstand durch die Lithiumnitridschicht und Pufferschicht kleiner ist als der Durchtrittswiderstand durch die Pufferschicht ohne das Lithiumnitrid.

## Revendications

1. Structure d'électrode (2) comprenant :
une couche de lithium métallique (4) ;
une couche tampon sensiblement non poreuse et sensiblement continue (6) disposée sur la couche de lithium métallique, dans laquelle la couche tampon est conductrice aux ions lithium, et dans laquelle la couche tampon comprend une céramique, une céramique vitreuse, ou un verre ; et
une couche de nitrure de lithium sensiblement non poreuse et sensiblement continue (8) disposée sur la couche tampon.

2. Structure d'électrode selon la revendication 1,
dans laquelle la couche de nitrure de lithium est formée en utilisant un gaz, un plasma, un matériau, ou un fluide qui est réactif avec la couche de lithium métallique.

3. Procédé de formation d'une structure d'électrode (2), le procédé comprenant :
la fourniture d'une couche de lithium métallique (4) ;
le dépôt d'une couche tampon sensiblement non poreuse et sensiblement continue (6) sur la couche de lithium métallique, dans lequel la couche tampon est conductrice aux ions lithium, et dans lequel la couche tampon comprend une céramique, une céramique vitreuse, ou un verre ; et
le dépôt d'une couche de nitrure de lithium sensiblement non poreuse et sensiblement continue (8) sur la couche tampon.

4. Procédé selon la revendication 3 :
dans lequel la couche de nitrure de lithium sensiblement non poreuse et sensiblement continue est déposée sur la couche tampon en utilisant un gaz, un plasma, un matériau, ou un fluide qui est réactif avec la couche de lithium métallique.

5. Procédé selon l'une quelconque des revendications 3-4, dans lequel le dépôt de la couche tampon comprend au moins un parmi la pulvérisation, le dépôt physique par phase vapeur, et le dépôt chimique par phase vapeur.

6. Procédé selon l'une quelconque des revendications 3-5, dans lequel le dépôt de la couche de nitrure de lithium comprend au moins un parmi le dépôt physique par phase vapeur, et le dépôt chimique par phase vapeur.

7. Structure d'électrode selon l'une quelconque des revendications 1-2, comprenant en outre une couche de libération disposée sur une surface d'au moins une parmi la couche de lithium métallique et la couche de nitrure de lithium ;
en option, comprenant en outre un substrat de support disposé sur la couche de libération.

8. Structure d'électrode selon l'une quelconque des revendications 1, 2, ou 7, ou procédé selon l'une quelconque des revendications 3 à 6, dans lequel :
(a) la couche tampon est disposée directement sur la couche de lithium, ou
(b) la couche de nitrure de lithium est disposée directement sur la couche tampon.

9. Structure d'électrode selon l'une quelconque des revendications 1, 2, 7 ou 8, ou procédé selon l'une quelconque des revendications 3 à 6 ou 8, dans lequel la couche tampon :
(a) comprend au moins un parmi l'oxyde de lithium, l'oxynitrure de lithium-phosphore, l'oxynitrure de lithium, le carbonate de lithium, l'halogénure de lithium, l'iodure de lithium, et le bromure de lithium, ou
(b) comprend du lithium, de l'azote, et du carbone, ou
(c) est un oxyde de lithium.

10. Structure d'électrode selon l'une quelconque des revendications 1, 2 ou 7 à 9, ou procédé selon l'une quelconque des revendications 3 à 6, 8 ou 9, dans lequel la couche tampon :
(a) est sensiblement amorphe, ou
(b) est polycristalline.

11. Structure d'électrode selon l'une quelconque des revendications 1, 2 ou 7 à 10, ou procédé selon l'une quelconque des revendications 3 à 6 ou 8 à 10, dans lequel la couche tampon :
(a) est non stoechiométrique, ou
(b) comprend un rapport molaire azote-oxygène qui est inférieur ou égal à 3:1 et supérieur ou égal à 1:2, ou
(c) comprend un rapport molaire lithium-carbone dans la couche tampon qui est inférieur ou égal à 2:1 et supérieur ou égal à 1:1.

12. Structure d'électrode selon l'une quelconque des revendications 1, 2 ou 7 à 11, ou procédé selon l'une quelconque des revendications 3 à 6 ou 8 à 11, dans lequel une épaisseur de la couche tampon est entre 100 nm et 1 µm.

13. Structure d'électrode selon l'une quelconque des revendications 1, 2 ou 7 à 12, ou procédé selon l'une quelconque des revendications 3 à 6 ou 8 à 12, dans lequel la couche de nitrure de lithium :
(a) est sensiblement amorphe, ou
(b) a un rapport molaire lithium-azote qui est inférieur ou égal à 3:1 et supérieur ou égal à 1:1.

14. Structure d'électrode selon l'une quelconque des revendications 1, 2 ou 7 à 13, ou procédé selon l'une quelconque des revendications 3 à 6 ou 8 à 13, dans lequel :
(a) une épaisseur de la couche de nitrure de lithium est entre 2 et 10 fois une épaisseur de la couche tampon, ou
(b) la couche de nitrure de lithium a une rugosité de surface moyenne arithmétique inférieure ou égale à 150 nm, ou
(c) une rugosité de surface moyenne arithmétique (Ra) de la couche de nitrure de lithium est entre 50 nm et 150 nm.

15. Structure d'électrode selon l'une quelconque des revendications 1, 2 ou 7 à 14, ou procédé selon l'une quelconque des revendications 3 à 6 ou 8 à 14, dans lequel une résistance de transfert de charge à travers la couche de nitrure de lithium et la couche tampon est inférieure à la résistance de transfert de charge à travers la couche tampon sans le nitrure de lithium.
